# EUROPEAN PATENT APPLICATION

(11) **EP 4 164 111 A1**
(43) Date of publication of application: **12.04.2023**
(21) Application number: 22200884.9
(22) Date of filing: 11.10.2022
(51) Int. Cl.: H02M 7/5387, H02M 7/487

(54) **INVERTER AND INVERTER APPARATUS**

(30) Priority: 11.10.2021 CN 202111182937
(71) Applicant: Huawei Digital Power Technologies Co., Ltd., Shenzhen, 518043 (CN)
(72) Inventor: SONG, Zhengang, Shenzhen 518129 (CN); YAO, Xiaofeng, Shenzhen 518129 (CN)
(74) Representative: Gill Jennings & Every LLP

(57) **Abstract**

This application provides an inverter and an inverter apparatus, to improve efficiency of the inverter while enabling an output voltage of the inverter to meet requirements of different devices. The inverter includes an input capacitor branch, a first bridge arm, a second bridge arm, a first inductor, a second inductor, a first capacitor, a second capacitor, and a freewheeling circuit. A first terminal of the first bridge arm is connected to a first terminal of the second bridge arm and a first terminal of the input capacitor branch. A second terminal of the first bridge arm is connected to a second terminal of the second bridge arm and a second terminal of the input capacitor branch. An intermediate node of the first bridge arm is connected to a first terminal of the second inductor. An intermediate node of the second bridge arm is connected to a first terminal of the first inductor. A first terminal of the first capacitor is connected to a second terminal of the first inductor. A second terminal of the first capacitor is connected to a first terminal of the second capacitor and a neutral point of a direct current input. A second terminal of the second capacitor is connected to a second terminal of the second inductor. The freewheeling circuit is connected to the neutral point, the intermediate node of the first bridge arm, and the intermediate node of the second bridge arm

## Description

### TECHNICAL FIELD

This application relates to the field of power electronics technologies, and in particular, to an inverter and an inverter apparatus.

### BACKGROUND

A solar photovoltaic power generation technology is a low-carbon, environmental-friendly, and green energy technology, and is currently being widely used. Generally, the solar photovoltaic power generation technology may be implemented by using a photovoltaic power generation system. The photovoltaic power generation system mainly includes a photovoltaic module and an inverter. The photovoltaic module may convert received luminous energy into electric energy in a form of a direct current. The inverter may convert the electric energy in the form of the direct current into electric energy in a form of an alternating current, and output the electric energy in the form of the alternating current to a grid.

In a country that uses a split-phase grid, for example, Japan, the grid is divided into a U phase and a W phase. A phase difference between the U phase and the W phase is 180 degrees, phase voltages of the U phase and the W phase are 101 volts (V), and line voltages of the U phase and the W phase are 202 V. In actual use, a low-power load may be connected to the U phase or the W phase, and the grid provides a 101 V voltage to supply power to the low-power load. For the foregoing split-phase grid, the inverter needs to be separately connected to the U phase and the W phase, to provide a 202 V grid-connection voltage for the grid, and implement a grid connection of the photovoltaic power generation system. In the foregoing grid connection manner, once the grid is faulty, the photovoltaic power generation system needs to supply power to the load by using the inverter. To implement voltage matching between an output voltage of the inverter and a power supply voltage of the load, only a manner of reducing a voltage conversion ratio of the inverter can be used to provide the power supply voltage of the load. However, in this matching manner, efficiency of the inverter is reduced, and energy waste is caused.

### SUMMARY

This application provides an inverter and an inverter apparatus, to improve efficiency of the inverter while enabling an output voltage of the inverter to meet requirements of different devices.

According to a first aspect, an embodiment of this application provides an inverter, where the inverter may include an input capacitor branch, a first bridge arm, a second bridge arm, a first inductor, a second inductor, a first capacitor, a second capacitor, and a freewheeling circuit.

A first terminal of the first bridge arm is separately connected to a first terminal of the second bridge arm and a first terminal of the input capacitor branch. A second terminal of the first bridge arm is separately connected to a second terminal of the second bridge arm and a second terminal of the input capacitor branch. An intermediate node of the first bridge arm is connected to a first terminal of the second inductor. An intermediate node of the second bridge arm is connected to a first terminal of the first inductor. A first terminal of the first capacitor is connected to a second terminal of the first inductor. A second terminal of the first capacitor is connected to a first terminal of the second capacitor and a neutral point of a direct current input. The neutral point is an intermediate node of the input capacitor branch. A second terminal of the second capacitor is connected to a second terminal of the second inductor. The freewheeling circuit is separately connected to the neutral point, the intermediate node of the first bridge arm, and the intermediate node of the second bridge arm, and is configured to provide a freewheeling path for the first inductor and/or the second inductor.

In the foregoing inverter structure, when the inverter is connected to a split-phase grid, the first bridge arm and the second bridge arm form an H-bridge inverter circuit, to convert, into a 202-volt line voltage of the split-phase grid, electric energy generated by a device (such as a photovoltaic power generation system) connected to the inverter, and output the line voltage to the grid. When the split-phase grid is faulty, the first bridge arm, the second inductor, and the second capacitor form a single-phase inverter circuit to provide a 101-volt power supply voltage for a first part of loads, and the input capacitor branch, the second bridge arm, the first inductor, and the first capacitor may form another single-phase inverter circuit to provide a 101-volt power supply voltage for a remaining load. The freewheeling circuit configures a freewheeling path for the H-bridge inverter circuit and the single-phase inverter circuit, to meet requirements of different devices. In addition, because an output terminal of each single-phase inverter circuit is connected to the neutral point, when the split-phase grid is faulty and the inverter supplies power to the load, the inverter becomes a three-level inverter, to reduce a switching loss of the inverter, and help improve efficiency of the inverter.

In a possible implementation, the freewheeling circuit includes a first freewheeling branch, a second freewheeling branch, and a third freewheeling branch, and each freewheeling branch includes one or two switches.

The first freewheeling branch is separately connected to the intermediate node of the first bridge arm and the neutral point, and the first freewheeling branch is configured to provide a freewheeling path for the second inductor. The second freewheeling branch is separately connected to the intermediate node of the second bridge arm and the neutral point, and the second freewheeling branch is configured to provide a freewheeling path for the first inductor. The third freewheeling branch is separately connected to the intermediate node of the first bridge arm and the intermediate node of the second bridge arm, and the third freewheeling branch is configured to provide a freewheeling path for the first inductor and the second inductor.

In the foregoing inverter structure, three freewheeling branches are separately disposed. When the inverter is connected to the split-phase grid, the third freewheeling branch provides a freewheeling path for the H-bridge inverter circuit. When the split-phase grid is faulty, the two single-phase inverter circuits formed by the inverter respectively supply power to the first part of loads and a second part of loads, and the first freewheeling branch and the second freewheeling branch respectively provide a freewheeling path for the two single-phase inverter circuits, to ensure that freewheeling paths are configured for the two single-phase inverter circuits when the inverter is connected to different devices, so as to ensure normal running of the inverter. In addition, because each freewheeling circuit includes a maximum of two switches, a loss in a freewheeling process can be reduced, to reduce a switching loss in the freewheeling process, and improve efficiency of the inverter.

In a possible implementation, the first freewheeling branch includes a first switch and a second switch, and the second freewheeling branch includes a third switch and a fourth switch.

A first electrode of the first switch is connected to the intermediate node of the first bridge arm, and a second electrode of the first switch is connected to a second electrode of the second switch. A first electrode of the second switch is connected to the neutral point. A first electrode of the third switch is connected to the intermediate node of the second bridge arm, and a second electrode of the third switch is connected to a second electrode of the fourth switch. A first electrode of the fourth switch is connected to the neutral point.

In the foregoing inverter structure, the first freewheeling branch and the second freewheeling branch each include two switches. When the inverter supplies power to the load, a freewheeling current of each inductor in the inverter needs to pass through only two switches, so that a loss of the inverter can be effectively reduced.

In a possible implementation, the third freewheeling branch includes a fifth switch and a sixth switch.

A first electrode of the fifth switch is connected to the intermediate node of the first bridge arm, and a second electrode of the fifth switch is connected to a second electrode of the sixth switch. A first electrode of the sixth switch is connected to the intermediate node of the second bridge arm.

In the foregoing inverter structure, the third freewheeling branch includes only two switches. When the inverter is connected to the split-phase grid, a freewheeling current of the inductor in the inverter needs to pass through only two switches, so that a loss of the inverter can be effectively reduced.

In a possible implementation, a first terminal of the third freewheeling branch is connected to the intermediate node of the first bridge arm by using an intermediate node of the first freewheeling branch, and a second terminal of the third freewheeling branch is connected to the intermediate node of the second bridge arm by using an intermediate node of the second freewheeling branch.

In the foregoing inverter structure, when the inverter is connected to the split-phase grid, the inverter cannot be connected to the load. Therefore, switches in the first freewheeling branch and the third freewheeling branch do not work at the same time, and switches in the second freewheeling branch and the third freewheeling branch do not work at the same time. To reduce a quantity of freewheeling switches of the inverter, the third freewheeling branch may complete freewheeling working by using a part of switches in the first freewheeling branch and a part of switches in the second freewheeling branch, to reduce costs of the inverter.

In a possible implementation, the third freewheeling branch includes a seventh switch.

A first electrode of the seventh switch is connected to the second electrode of the first switch, and a second electrode of the seventh switch is connected to the second electrode of the third switch.

In the foregoing inverter structure, when the inverter is connected to the split-phase grid, the inverter may perform freewheeling by using the seventh switch, a part of switches in the second freewheeling branch, and a part of switches in the first freewheeling branch, so that a part of switches are reused, and a quantity of freewheeling switches of the inverter is reduced, to reduce costs of the inverter.

In a possible implementation, the second freewheeling branch is connected to the intermediate node of the second bridge arm by using an intermediate node of the third freewheeling branch.

In the foregoing inverter structure, when the inverter is connected to the split-phase grid, the inverter cannot be connected to the load. Therefore, switches in the second freewheeling branch and the third freewheeling branch do not work at the same time. To reduce a quantity of freewheeling switches of the inverter, the second freewheeling branch may complete freewheeling working by using a part of switches in the third freewheeling branch, to reduce costs of the inverter.

In a possible implementation, the second freewheeling branch includes an eighth switch.

A first electrode of the eighth switch is connected to the neutral point, and a second electrode of the eighth switch is connected to the intermediate node of the third freewheeling branch.

In the foregoing inverter structure, the second freewheeling branch may provide a freewheeling path for the inductor in the inverter by using a part of switches in the third freewheeling branch, so that a part of switches in the third freewheeling branch are reused, and a quantity of freewheeling switches of the inverter is reduced, to reduce costs of the inverter.

In a possible implementation, the first freewheeling branch is connected to the intermediate node of the first bridge arm by using an intermediate node of the third freewheeling branch.

In the foregoing inverter structure, when the inverter is connected to the split-phase grid, the inverter cannot be connected to the load. Therefore, switches in the first freewheeling branch and the third freewheeling branch do not work at the same time. To reduce a quantity of freewheeling switches of the inverter, the second freewheeling branch may complete freewheeling working by using a part of switches in the third freewheeling branch, to reduce costs of the inverter.

In a possible implementation, the first freewheeling branch includes a ninth switch.

A first electrode of the ninth switch is connected to the neutral point, and a second electrode of the ninth switch is connected to the intermediate node of the third freewheeling branch.

In the foregoing inverter structure, the first freewheeling branch may provide a freewheeling path for the inductor in the inverter by using a part of switches in the third freewheeling branch, and the first freewheeling branch includes one switch, so that a quantity of freewheeling switches of the inverter is reduced, to reduce costs of the inverter.

In a possible implementation, the freewheeling circuit includes a first branch, a second branch, and a third branch.

A first terminal of the first branch is connected to the neutral point, and a second terminal of the first branch is connected to a first terminal of the second branch and a first terminal of the third branch. A second terminal of the second branch is connected to the intermediate node of the first bridge arm. A second terminal of the third branch is connected to the intermediate node of the second bridge arm. The second branch and the third branch are connected in series to form the third freewheeling branch. The first branch and the second branch are connected in series to form the first freewheeling branch. The first branch and the third branch are connected in series to form the second freewheeling branch.

In the foregoing inverter structure, switches in the three freewheeling branches may be reused, so that a quantity of freewheeling switches of the inverter is further reduced, to reduce costs of the inverter.

In a possible implementation, the first branch includes a tenth switch, the second branch includes an eleventh switch, and the third branch includes a twelfth switch.

A first electrode of the tenth switch is connected to the neutral point. A second electrode of the eleventh switch is connected to a second electrode of the tenth switch, and a first electrode of the eleventh switch is connected to the intermediate node of the first bridge arm. A second electrode of the twelfth switch is connected to the second electrode of the tenth switch, and a first electrode of the twelfth switch is connected to the intermediate node of the second bridge arm.

In the foregoing inverter structure, the freewheeling circuit includes three switches to provide a plurality of freewheeling paths, so that freewheeling requirements existing when the inverter is connected to different switches are met, and costs of the inverter are reduced.

According to a second aspect, an embodiment of this application provides an inverter apparatus, where the inverter apparatus includes a controller and the inverter provided in any one of the first aspect or the possible designs of the first aspect of the embodiments of this application.

### BRIEF DESCRIPTION OF DRAWINGS

FIG. 1 is a schematic diagram of a structure of an inverter according to an embodiment of this application;
FIG. 2 is a schematic diagram of a structure of an inverter according to an embodiment of this application;
FIG. 3 is a schematic diagram of a structure of a freewheeling circuit according to an embodiment of this application;
FIG. 4 is a schematic diagram of current transmission of an inverter according to an embodiment of this application;
FIG. 5 is a schematic diagram of current transmission of an inverter according to an embodiment of this application;
FIG. 6 is a schematic diagram of current transmission of an inverter according to an embodiment of this application;
FIG. 7 is a schematic diagram of current transmission of an inverter according to an embodiment of this application;
FIG. 8 is a schematic diagram of current transmission of an inverter according to an embodiment of this application;
FIG. 9 is a schematic diagram of current transmission of an inverter according to an embodiment of this application;
FIG. 10 is a schematic diagram of current transmission of an inverter according to an embodiment of this application;
FIG. 11 is a schematic diagram of current transmission of an inverter according to an embodiment of this application;
FIG. 12 is a schematic diagram of current transmission of an inverter according to an embodiment of this application;
FIG. 13 is a schematic diagram of current transmission of an inverter according to an embodiment of this application;
FIG. 14 is a schematic diagram of current transmission of an inverter according to an embodiment of this application;
FIG. 15 is a schematic diagram of current transmission of an inverter according to an embodiment of this application;
FIG. 16 is a schematic diagram of a structure of a freewheeling circuit according to an embodiment of this application;
FIG. 17 is a schematic diagram of current transmission of an inverter according to an embodiment of this application;
FIG. 18 is a schematic diagram of current transmission of an inverter according to an embodiment of this application;
FIG. 19 is a schematic diagram of a structure of a freewheeling circuit according to an embodiment of this application;
FIG. 20 is a schematic diagram of current transmission of an inverter according to an embodiment of this application;
FIG. 21 is a schematic diagram of current transmission of an inverter according to an embodiment of this application;
FIG. 22 is a schematic diagram of current transmission of an inverter according to an embodiment of this application;
FIG. 23 is a schematic diagram of current transmission of an inverter according to an embodiment of this application;
FIG. 24 is a schematic diagram of a structure of a freewheeling circuit according to an embodiment of this application;
FIG. 25 is a schematic diagram of current transmission of an inverter according to an embodiment of this application;
FIG. 26 is a schematic diagram of current transmission of an inverter according to an embodiment of this application;
FIG. 27 is a schematic diagram of current transmission of an inverter according to an embodiment of this application;
FIG. 28 is a schematic diagram of current transmission of an inverter according to an embodiment of this application;
FIG. 29 is a schematic diagram of a structure of a freewheeling circuit according to an embodiment of this application;
FIG. 30 is a schematic diagram of current transmission of an inverter according to an embodiment of this application;
FIG. 31 is a schematic diagram of current transmission of an inverter according to an embodiment of this application;
FIG. 32 is a schematic diagram of current transmission of an inverter according to an embodiment of this application;
FIG. 33 is a schematic diagram of current transmission of an inverter according to an embodiment of this application;
FIG. 34 is a schematic diagram of current transmission of an inverter according to an embodiment of this application; and
FIG. 35 is a schematic diagram of current transmission of an inverter according to an embodiment of this application.

### DESCRIPTION OF EMBODIMENTS

The following describes in detail embodiments of this application with reference to accompanying drawings.

A specific operation method in a method embodiment may also be applied to an apparatus embodiment or a system embodiment. It should be noted that, in the descriptions of this application, "at least one" means one or more, and "a plurality of' means two or more than two. Therefore, "a plurality of' in the embodiments of the present invention may be also understood as "at least two". The term "and/or" describes an association relationship for describing associated objects and represents that three relationships may exist. For example, A and/or B may represent the following three cases: Only A exists, both A and B exist, and only B exists. In addition, unless otherwise specified, the character "/" generally indicates an "or" relationship between the associated objects. In addition, it should be understood that in description of this application, terms such as "first" and "second" are merely used for distinguishing and description, but should not be understood as indicating or implying relative importance, or should not be understood as indicating or implying a sequence.

It should be noted that, in the embodiments of this application, "connection" is an electrical connection, and a connection between two electrical elements may be a direct or indirect connection between the two electrical elements. For example, a connection between A and B may be a direct connection between A and B, or may be an indirect connection between A and B by using one or more other electrical elements. For example, a connection between A and B may be a direct connection between A and C, a direct connection between C and B, or a connection between A and B by using C.

It should be noted that a switch in the embodiments of this application may be one or more of a plurality of switch devices such as a relay, a metal-oxide semiconductor field-effect transistor (metal oxide semiconductor field effect transistor, MOSFET), a bipolar junction transistor (bipolar junction transistor, BJT), an insulated gate bipolar transistor (insulated gate bipolar transistor, IGBT), a gallium nitride (GaN) field effect transistor, and a silicon carbide (SiC) power tube. The switch devices are not listed one by one in the embodiments of this application. Each switch device may include a first electrode, a second electrode, and a control electrode. The control electrode is used to control the switch device to be turned on or turned off. When the switch device is turned on, a current may be transmitted between the first electrode and the second electrode of the switch device. When the switch device is turned off, a current cannot be transmitted between the first electrode and the second electrode of the switch device. The MOSFET is used as an example. The control electrode of the switch device is a gate. The first electrode of the switch device may be a source of the switch device, and the second electrode may be a drain of the switch device. Alternatively, the first electrode may be a drain of the switch device, and the second electrode may be a source of the switch device.

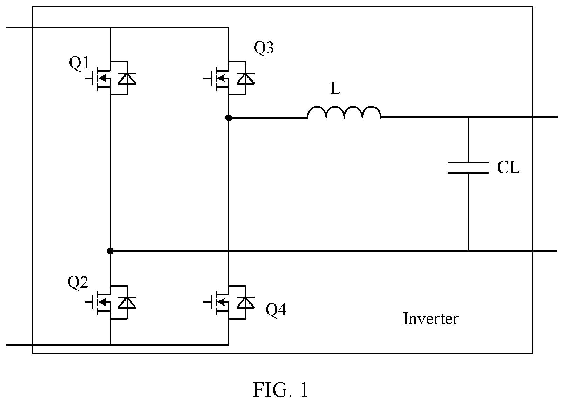

FIG. 1 shows a possible circuit structure of a grid-tied inverter. Referring to FIG. 1, the inverter mainly includes a first bridge arm, a second bridge arm, a freewheeling inductor L, and an output capacitor C. The first bridge arm and the second bridge arm form an H-bridge inverter circuit, the first bridge arm may include a switch Q1 and a switch Q2, and the second bridge arm may include a switch Q3 and a switch Q4.

Specifically, a first electrode of the switch Q1 is a first input terminal of the inverter. A second electrode of the switch Q1 is connected to a first electrode of the switch Q2. A second electrode of the switch Q2 is a second input terminal of the inverter. A first electrode of the switch Q3 is connected to the first electrode of the switch Q1. A second electrode of the switch Q3 is connected to a first electrode of the switch Q4. A second electrode of the switch Q4 is connected to the second electrode of the switch Q2. A first terminal of the freewheeling inductor L is connected to the second electrode of the switch Q3. A second terminal of the freewheeling inductor L is connected to a first terminal of the output capacitor C. A second terminal of the output capacitor C is connected to the first electrode of the switch Q2. The first terminal of the output capacitor C forms a first output terminal of the inverter. The second terminal of the output capacitor C forms a second output terminal of the inverter.

In a possible implementation, to reduce fluctuation of electric energy received by the inverter, an input capacitor Cin is further connected in the inverter, a first terminal of the input capacitor Cin is connected to the first electrode of the switch Q1, and a second terminal of the input capacitor Cin is connected to the second electrode of the switch Q2.

In actual use, the input terminal of the inverter may be connected to a power generation system, the output terminal of the inverter may be connected to a grid, and the inverter may convert, into a grid voltage, electric energy generated by the power generation system, and output the grid voltage to the grid, to implement a grid connection of the power generation system. The power generation system may be a photovoltaic power generation system, or may be a wind power generation system. Certainly, the power generation system may be another power generation system that can generate electric energy. This is not limited in this application.

The following is described by using an example in which the power generation system is the photovoltaic power generation system.

If a split-phase grid is normal, the two output terminals of the inverter are directly connected to two phase wires of the split-phase grid, the inverter is in an on-grid state, and the inverter converts, into a line voltage of the split-phase grid, electric energy generated by the photovoltaic power generation system, and outputs the line voltage. If a split-phase grid is faulty, the inverter needs to be in an off-grid state, the two output terminals of the inverter are connected to a load to supply power to the load, and a power supply voltage of the load is a phase voltage of the split-phase grid, that is, is half of a line voltage of the split-phase grid. Consequently, an output voltage of the inverter does not match the power supply voltage of the load. Currently, matching between the power supply voltage of the load and the output voltage of the inverter is generally implemented in two manners. In a first manner, the output voltage of the inverter is controlled to be half of the line voltage of the split-phase grid. In the other manner, a step-down transformer is connected between the output terminal of the inverter and the load, and the step-down transformer may convert the output voltage of the inverter into the power supply voltage of the load. However, in the foregoing two manners, a problem of a large device loss and low power supply efficiency exists.

To resolve the foregoing problem, the embodiments of this application provide an inverter and an inverter apparatus, to improve efficiency of the inverter while meeting voltage requirements of a split-phase grid and a load.

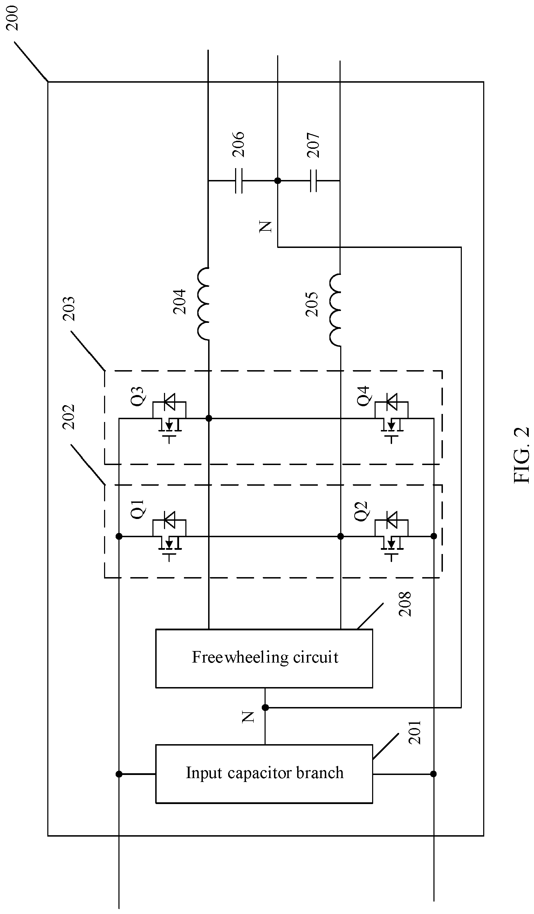

FIG. 2 shows an inverter provided in an embodiment of this application. Referring to FIG. 2, an inverter 200 may include an input capacitor branch 201, a first bridge arm 202, a second bridge arm 203, a first inductor 204, a second inductor 205, a first capacitor 206, a second capacitor 207, and a freewheeling circuit 208.

A first terminal of the first bridge arm 202 is separately connected to a first terminal of the second bridge arm 203 and a first terminal of the input capacitor branch 201. A second terminal of the first bridge arm 202 is separately connected to a second terminal of the second bridge arm 203 and a second terminal of the input capacitor branch 201. An intermediate node of the first bridge arm 202 is connected to a first terminal of the second inductor 205. An intermediate node of the second bridge arm 203 is connected to a first terminal of the first inductor 204. A first terminal of the first capacitor 206 is connected to a second terminal of the first inductor 204. A second terminal of the first capacitor 206 is connected to a first terminal of the second capacitor 207 and a neutral point of a direct current input. A second terminal of the second capacitor 207 is connected to a second terminal of the second inductor 205. The freewheeling circuit 208 is separately connected to the neutral point, the intermediate node of the first bridge arm 202, and the intermediate node of the second bridge arm 203, and is configured to provide a freewheeling path for the first inductor 204 and/or the second inductor 205.

In actual use, the input capacitor branch 201 may include at least one positive bus capacitor C1 and at least one negative bus capacitor C2 that are successively connected in series. A first terminal of the first positive bus capacitor C1 connected in series is the first terminal of the input capacitor branch 201, and a second terminal of the last negative bus capacitor C2 connected in series is the second terminal of the input capacitor branch 201. A quantity of positive bus capacitors C1 is the same as a quantity of negative bus capacitors C2, and a capacitance of the positive bus capacitor C1 is equal to a capacitance of the negative bus capacitor C2. An intermediate node of a plurality of bus capacitors connected in series in the input capacitor branch 201 is the neutral point N. In this application, that one positive bus capacitor C1 and one negative bus capacitor C2 are connected in series in the input capacitor branch 201 is used as an example for description.

Specifically, the first bridge arm 202 may include a switch Q1 and a switch Q2, and the second bridge arm 203 may include a switch Q3 and a switch Q4. Specifically, for a manner of connecting the switches in the first bridge arm 202 and the second bridge arm 203, refer to FIG. 1. Details are not described herein again in this application.

In this embodiment of this application, the direct current input of the inverter 200 may be connected to a power generation system. When the inverter 200 is in an on-grid state, an alternating current output of the inverter 200 may be connected to a split-phase grid, to convert, into a line voltage of the split-phase grid, electric energy generated by the power generation system, and output the line voltage to the split-phase grid. When the inverter 200 is in an off-grid state, an alternating current output of the inverter is connected to a load, to output a power supply voltage of the load, and supply power to the load.

Specifically, the first terminal of the input capacitor branch 201 is a first port of the direct current input of the inverter 200, and the second terminal of the input capacitor branch 201 is a second port of the direct current input of the inverter 200, and the first port and the second port are connected to two ports that output electric energy and that are of the power generation system. The first terminal of the input capacitor branch 201 may be connected to a terminal that outputs a high level and that is of the power generation system, and the second terminal of the input capacitor branch 201 may be connected to a terminal that outputs a low level and that is of the power generation system.

In the inverter 200 provided in this embodiment of this application, when the inverter 200 is in an on-grid state, the first bridge arm 202 and the second bridge arm 203 form an H-bridge inverter circuit, the first inductor 204 and the second inductor 205 form a freewheeling inductor in the H-bridge inverter circuit, the first capacitor 206 and the second capacitor 207 are connected in series to form an output capacitor in the H-bridge inverter circuit, one freewheeling branch of the freewheeling circuit 208 provides a freewheeling path for the freewheeling inductor in the H-bridge inverter circuit, and the H-bridge inverter circuit converts, into the line voltage of the split-phase grid, a direct current that is input by the power generation system, and outputs the line voltage by using the first terminal of the first capacitor 206 and the second terminal of the second capacitor 207.

In the grid-tied inverter 200 provided in this embodiment of this application, when the inverter 200 is in an off-grid state, the first bridge arm 202, the second inductor 205, the second capacitor 207, and one freewheeling branch of the freewheeling circuit form a first single-phase inverter circuit. The second inductor 205 is a freewheeling inductor in the first single-phase inverter circuit, the second capacitor 207 is an output capacitor in the first single-phase inverter circuit, and the one freewheeling branch of the freewheeling circuit 208 provides a freewheeling path for the second inductor 205 in the first single-phase inverter circuit. The first single-phase inverter circuit may convert a voltage of the input capacitor branch into the power supply voltage of the load, and output the power supply voltage of the load by using the first terminal of the second capacitor 207 and the second terminal of the second capacitor 207. The input capacitor branch 201, the second bridge arm 203, the first inductor 204, the first capacitor 206, and one freewheeling branch of the freewheeling circuit form a second single-phase inverter circuit. The first inductor 204 is a freewheeling inductor in the second single-phase inverter circuit, the first capacitor 206 is an output capacitor in the second single-phase inverter circuit, and the one freewheeling branch of the freewheeling circuit 208 provides a freewheeling path for the first inductor 206 in the second single-phase inverter circuit. The second single-phase inverter circuit may convert a voltage of the input capacitor branch 201 into the power supply voltage of the load, and output the power supply voltage of the load by using the first terminal of the first capacitor 204 and the second terminal of the first capacitor 206.

In actual use, when the inverter 200 is in an off-grid state, two terminals of the first capacitor 206 may be connected to a first part of loads, and the second capacitor 207 may be connected to a second part of loads. The first capacitor 206 supplies power to the first part of loads, and the second capacitor 207 supplies power to the second part of loads.

It should be noted that the first single-phase inverter circuit and the second single-phase inverter circuit separately perform, by using different devices, inversion processing on a direct current received by the input capacitor branch 201 of the inverter 200. Therefore, the first single-phase inverter circuit and the second single-phase inverter circuit may work independently. Electric energy received by each single-phase inverter circuit is less than input electric energy of the H-bridge inverter circuit. Therefore, when the inverter 200 is in an off-grid state, a switching loss of the single-phase inverter circuit is less than a switching loss existing when the inverter 200 is in an on-grid state, so that efficiency of the inverter 200 can be effectively improved. In addition, there are only a small quantity of switches in a freewheeling branch of each inductor in the freewheeling circuit 208, so that a freewheeling loss of the inductor is reduced, and efficiency of the inverter 200 is further improved.

In actual use, a time sequence of turning on the plurality of switches in the first bridge arm 202 and the second bridge arm may be controlled and a suitable freewheeling branch may be selected from the freewheeling circuit 208, to output the line voltage of the split-phase grid when the inverter 200 is in an on-grid state, and output the power supply voltage of the load when the inverter 200 is in an off-grid state.

Specifically, the freewheeling circuit 208 includes three freewheeling branches, and each freewheeling branch includes one or two switches. In actual use, the freewheeling circuit may include a plurality of circuit structures. The following describes the plurality of circuit structures of the freewheeling circuit 208 and a working process of the inverter 200 in the circuit structure by using embodiments.

### Embodiment 1

The freewheeling circuit 208 may include a first freewheeling branch, a second freewheeling branch, and a third freewheeling branch.

The first freewheeling branch is separately connected to the intermediate node of the first bridge arm 202 and the neutral point N. When the inverter 200 is in an off-grid state, the first freewheeling branch may provide a freewheeling path for the second inductor 205 in the first single-phase inverter circuit. The second freewheeling branch is separately connected to the intermediate node of the second bridge arm 203 and the neutral point N. When the inverter 200 is in an off-grid state, the second freewheeling branch may provide a freewheeling path for the first inductor 204 in the second single-phase inverter circuit. The third freewheeling branch is separately connected to the intermediate node of the first bridge arm 202 and the intermediate node of the second bridge arm 203. When the inverter 200 is in an on-grid state, the third freewheeling branch may provide a freewheeling path for the first inductor 204 and the second inductor 205 in the H-bridge inverter circuit.

The first freewheeling branch includes a first switch S 1 and a second switch S2. The second freewheeling branch includes a third switch S3 and a fourth switch S4. The third freewheeling branch includes a fifth switch S5 and a sixth switch S6.

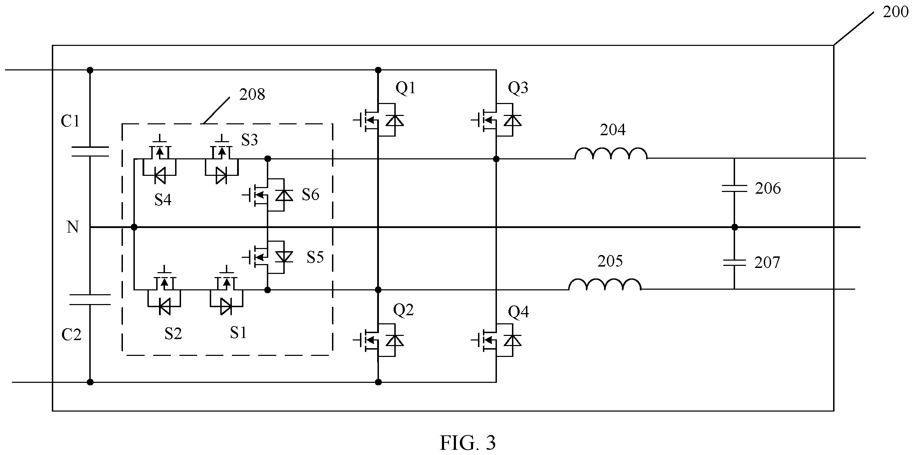

Specifically, referring to FIG. 3, a first electrode of the first switch S1 is connected to the intermediate node of the first bridge arm 202, and a second electrode of the first switch S1 is connected to a second electrode of the second switch S2. A first electrode of the second switch S2 is connected to the neutral point N. A first electrode of the third switch S3 is connected to the intermediate node of the second bridge arm 203, and a second electrode of the third switch S3 is connected to a second electrode of the fourth switch S4. A first electrode of the fourth switch S4 is connected to the neutral point N. A first electrode of the fifth switch S5 is connected to the intermediate node of the first bridge arm 202, and a second electrode of the fifth switch S5 is connected to a second electrode of the sixth switch S6. A first electrode of the sixth switch S6 is connected to the intermediate node of the second bridge arm 203.

Specifically, a first terminal of the positive bus capacitor C1 in the input capacitor branch 201 is connected to the terminal that outputs the high level and that is of the power generation system, a second terminal of the negative bus capacitor C2 in the input capacitor branch 201 is connected to the terminal that outputs the low level and that is of the power generation system, and the positive bus capacitor C1 and the negative bus capacitor C2 receive direct current electric energy that is output by the power generation system.

When the inverter 200 provided in this embodiment of this application is in an on-grid state, the first terminal of the positive bus capacitor C1 in the input capacitor branch 201 is connected to the terminal that outputs the high level and that is of the power generation system, the second terminal of the negative bus capacitor C2 in the input capacitor branch 201 is connected to the terminal that outputs the low level and that is of the power generation system, the first terminal of the first capacitor 206 is connected to one phase wire of the split-phase grid, and the second terminal of the second capacitor 207 is connected to the other phase wire of the split-phase grid, to output the line voltage to the split-phase grid.

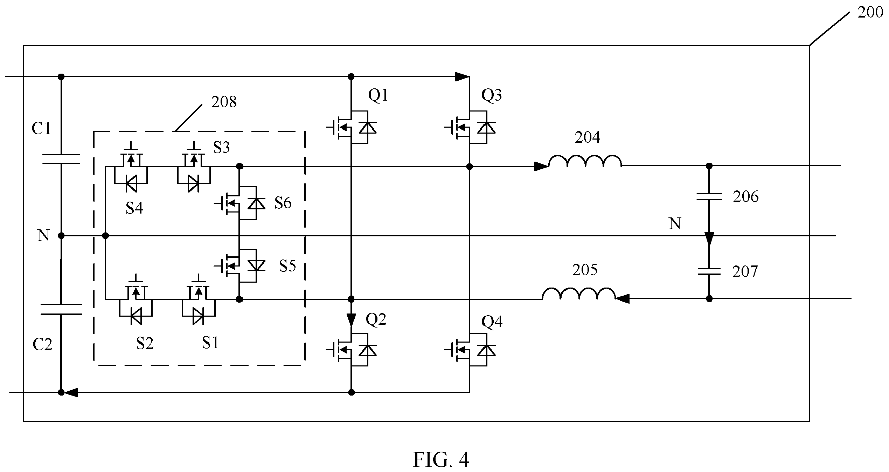

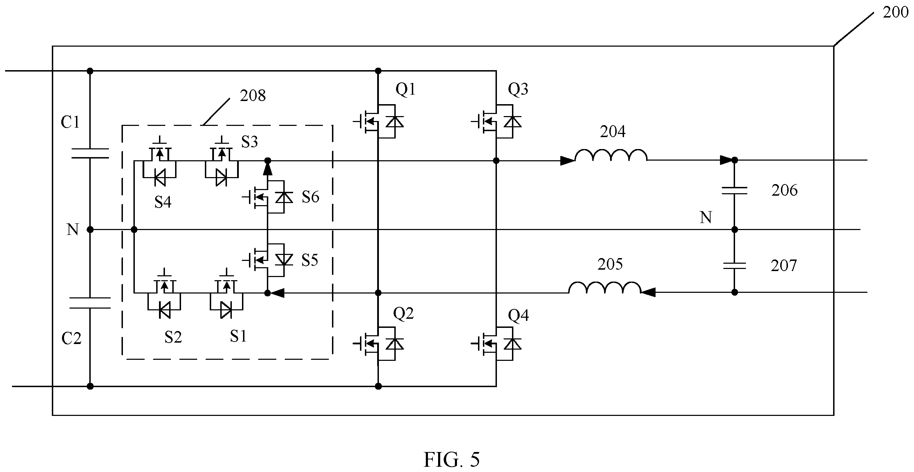

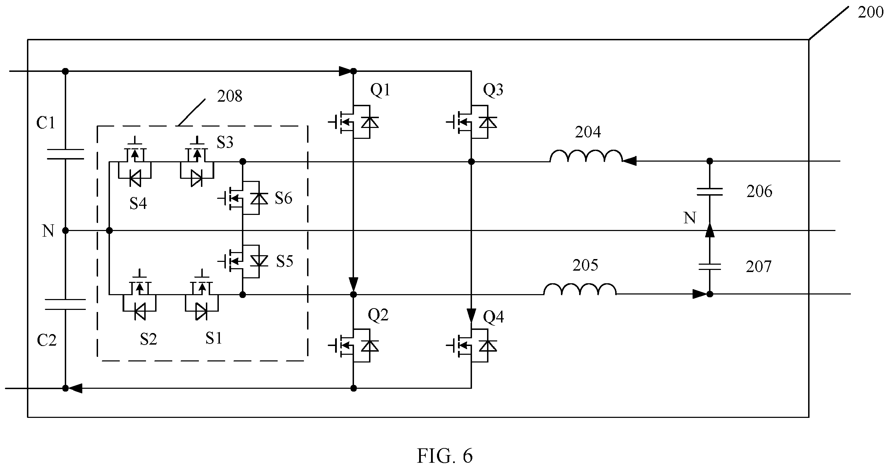

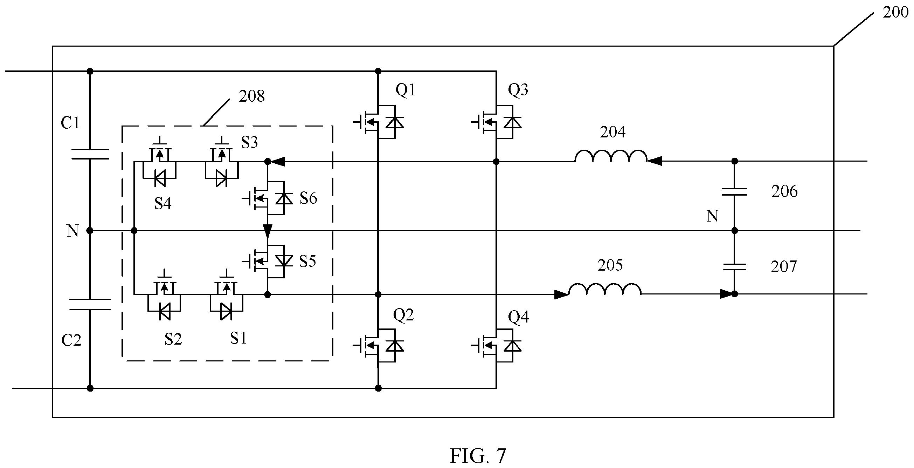

Specifically, mains power is transmitted in the split-phase grid. In a positive half cycle of the mains power, the switches Q2 and Q3 are controlled to be turned on, and the switches Q1 and Q4 are controlled to be turned off. Starting from the first terminal of the positive bus capacitor C1, a direct current successively passes through the switch Q3, the first inductor 204, the first capacitor 206, the second capacitor 207, the second inductor 205, and the switch Q2 to return to the second terminal of the negative bus capacitor C2. For a current transmission direction, refer to FIG. 4. In this case, the first terminal of the first capacitor 206 and the second terminal of the second capacitor 207 output a voltage whose upper end is positive and lower end is negative. Because a current flowing through the first inductor 204 and the second inductor 205 cannot suddenly change, a current that is output by the first capacitor 206 and the second capacitor 207 increases gradually. After the first inductor 204 and the second inductor 205 complete energy storage or stored energy reaches a target value, the switches Q2 and Q3 are controlled to be turned off. In this case, the first inductor 204 and the inductor 205 perform freewheeling by using the switches S5 and S6 in the third freewheeling branch. In this case, for a current transmission direction, refer to FIG. 5. The current that is transmitted by the first capacitor 206 and the second capacitor 207 decreases gradually, and a direction of the voltage that is output by the first terminal of the first capacitor 206 and the second terminal of the second capacitor 207 remains unchanged. In a negative half cycle of the mains power, the switches Q1 and Q4 in the first bridge arm are controlled to be turned on, and the switches Q2 and Q3 are controlled to be turned off. Starting from the first terminal of the positive bus capacitor C1, a direct current successively passes through the switch Q1, the second inductor 205, the second capacitor 207, the first capacitor 206, the first inductor 204, and the switch Q4 to return to the second terminal of the negative bus capacitor C2. For a current transmission direction, refer to FIG. 6. In this case, the first terminal of the first capacitor 206 and the second terminal of the second capacitor 207 output a voltage whose upper end is negative and lower end is positive. Because a current flowing through the first inductor 204 and the second inductor 205 cannot suddenly change, a current that is output by the first capacitor 206 and the second capacitor 207 increases gradually. After the first inductor 204 and the second inductor 205 complete energy storage or stored energy reaches a target value, the switches Q1 and Q4 are controlled to be turned off. In this case, the first inductor 204 and the inductor 205 perform freewheeling by using the switches S5 and S6 in the third freewheeling branch. In this case, for a current transmission direction, refer to FIG. 7. The current that is transmitted by the first capacitor 206 and the second capacitor 207 decreases gradually, and a direction of the voltage that is output by the first terminal of the first capacitor 206 and the second terminal of the second capacitor 207 remains unchanged.

When the inverter 200 provided in this embodiment of this application is in an off-grid state, the first terminal of the positive bus capacitor C1 in the input capacitor branch 201 is connected to the terminal that outputs the high level and that is of the power generation system, the second terminal of the negative bus capacitor C2 in the input capacitor branch 201 is connected to the terminal that outputs the low level and that is of the power generation system, the first terminal of the first capacitor 206 and the second terminal of the first capacitor 206 are connected to the first part of loads, and the first terminal of the second capacitor 207 and the second terminal of the second capacitor 207 are connected to the second part of loads, to respectively provide the power supply voltage for the first part of loads and the second part of loads. Both the power supply voltage of the first part of loads and the power supply voltage of the second part of loads are half of the line voltage of the split-phase grid.

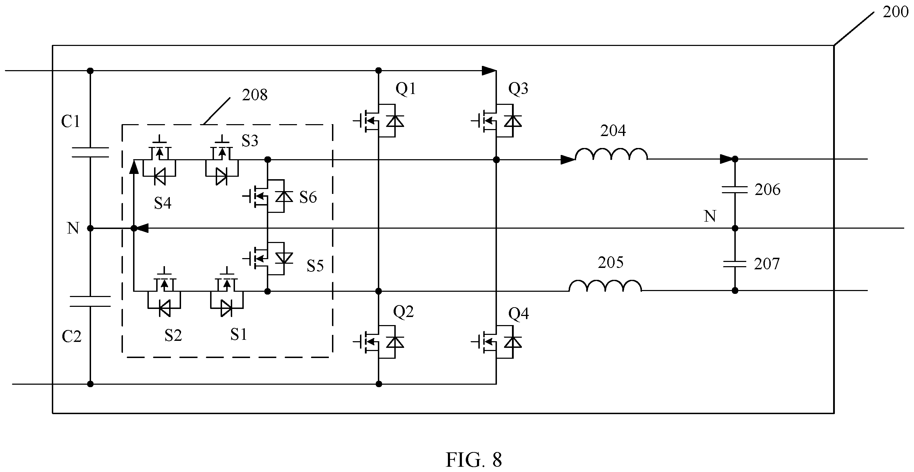

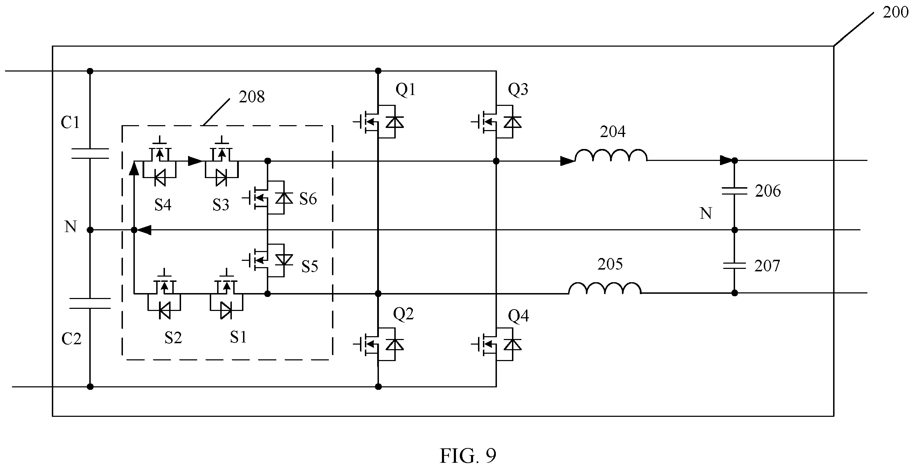

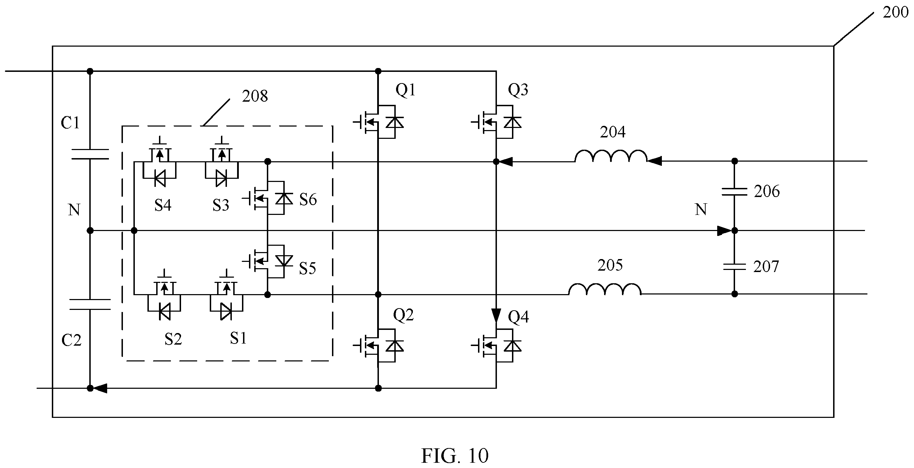

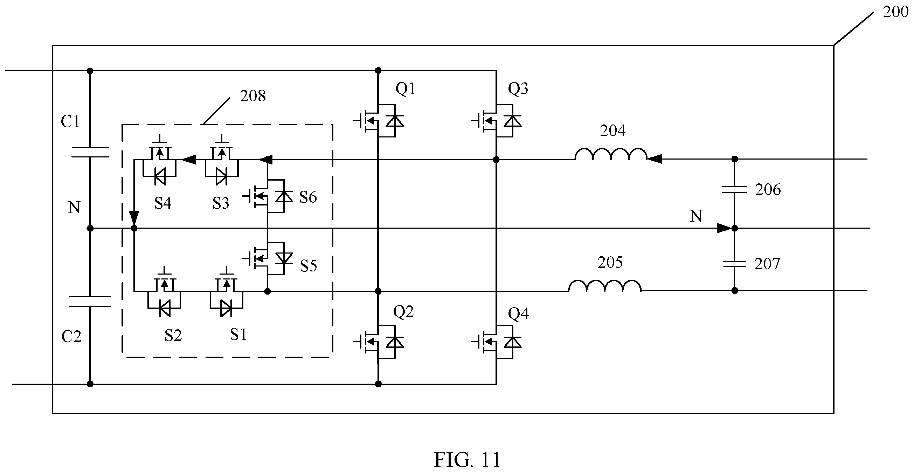

When the inverter 200 provided in this embodiment of this application supplies power to the first part of loads, the switch Q3 is controlled to be turned on, and other switches are controlled to be turned off. Starting from the first terminal of the positive bus capacitor C1, a direct current successively passes through the switch Q3, the first inductor 204, and the first capacitor 206 to return to the neutral point N. For a current transmission direction, refer to FIG. 8. In this case, the first capacitor 206 outputs a voltage whose upper end is positive and lower end is negative. Because a current flowing through the first inductor 204 cannot suddenly change, a current that is transmitted by the first capacitor 206 increases gradually. After the first inductor 204 completes energy storage or stored energy reaches a target value, the switch Q3 is controlled to be turned off. In this case, the first inductor 204 performs freewheeling by using the switches S3 and S4 in the second freewheeling branch. In this case, for a current transmission direction, refer to FIG. 9. The current that is transmitted by the first capacitor 206 decreases gradually, and a direction of the voltage that is output by the first capacitor 206 remains unchanged, to form a positive half cycle signal of the power supply voltage of the first part of loads. The switch Q4 in the second bridge arm is controlled to be turned on, and other switches are controlled to be turned off. Starting from the neutral point N, a direct current successively passes through the first capacitor 206, the first inductor 204, and the switch Q4 to return to the second terminal of the negative bus capacitor C2. For a current transmission direction, refer to FIG. 10. In this case, the first capacitor 206 outputs a voltage whose upper end is negative and lower end is positive. Because a current flowing through the first inductor 204 cannot suddenly change, a current that is output by the first capacitor 206 increases gradually. After the first inductor 204 completes energy storage or stored energy reaches a target value, the switch Q4 is controlled to be turned off. In this case, the first inductor 204 performs freewheeling by using the switches S4 and S3 in the third freewheeling branch. In this case, for a current transmission direction, refer to FIG. 11. The current that is transmitted by the first capacitor 206 decreases gradually, and a direction of the voltage that is output by the first capacitor 206 remains unchanged, to form a negative half cycle signal of the power supply voltage of the first part of loads. In addition, the power supply voltage is output to the first part of loads by using the first terminal of the first capacitor 206 and the second terminal of the first capacitor 206, to supply power to the first part of loads.

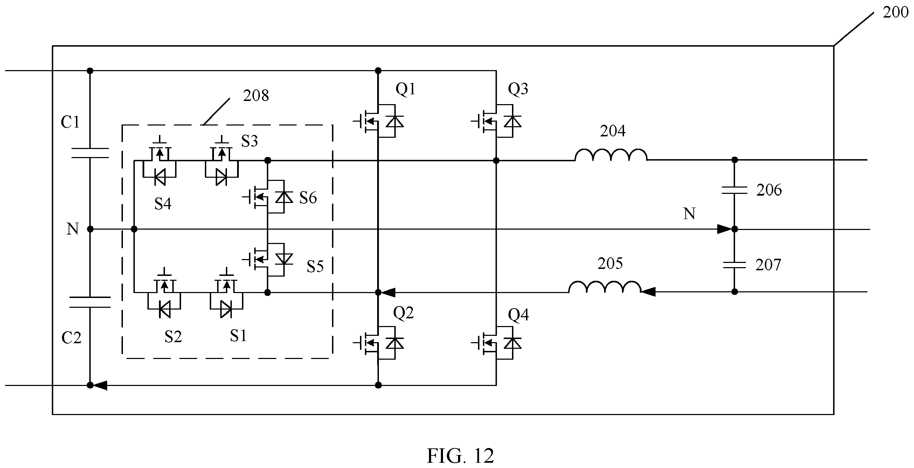

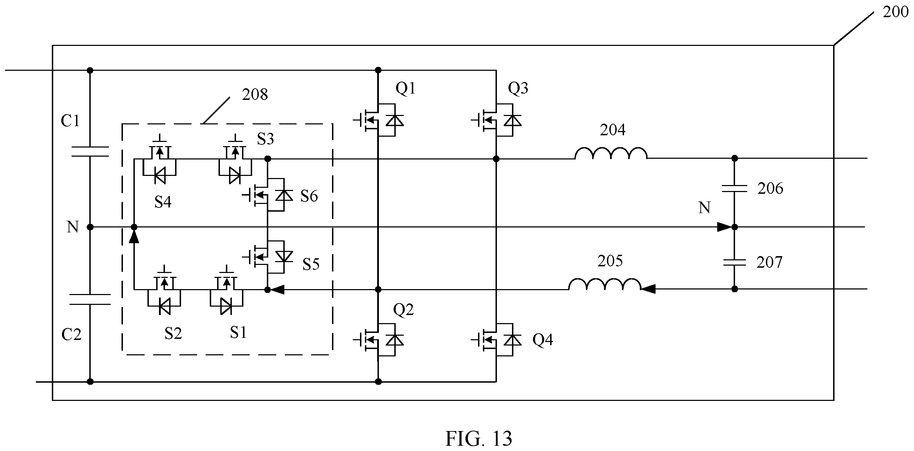

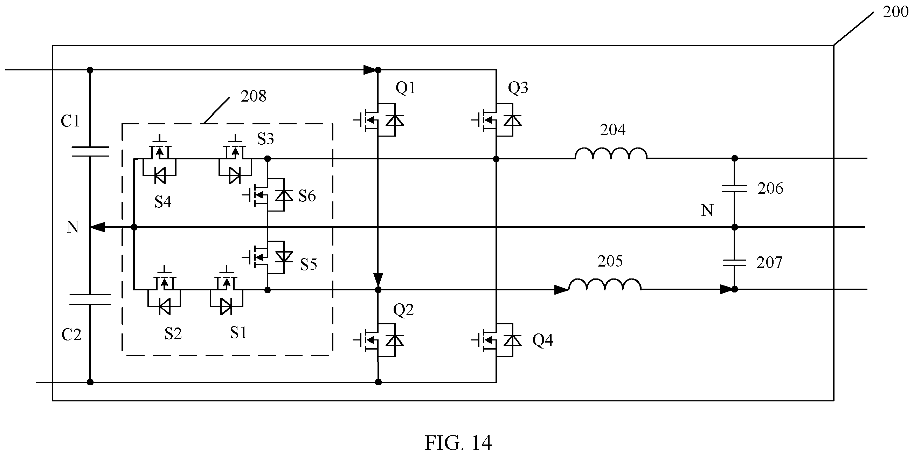

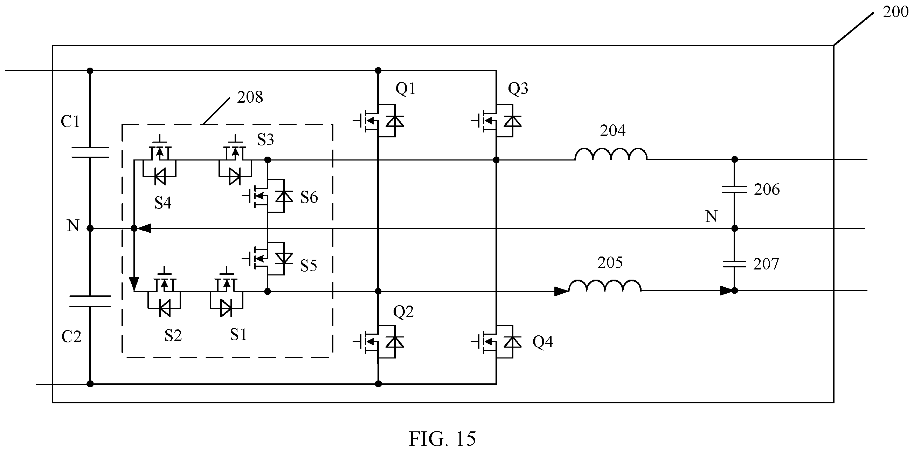

When the inverter 200 provided in this embodiment of this application supplies power to the second part of loads, the switch Q2 is controlled to be turned on, and other switches are controlled to be turned off. Starting from the neutral point N, a direct current successively passes through the second capacitor 207, the second inductor 205, and the switch Q2 to return to the second terminal of the negative bus capacitor C2. For a current transmission direction, refer to FIG. 12. In this case, the second capacitor 207 outputs a voltage whose upper end is positive and lower end is negative. Because a current flowing through the second inductor 205 cannot suddenly change, a current that is transmitted by the second capacitor 207 increases gradually. After the second inductor 205 completes energy storage or stored energy reaches a target value, the switch Q2 is controlled to be turned off. In this case, the second inductor 205 performs freewheeling by using the switches S1 and S2 in the first freewheeling branch. For a current transmission direction, refer to FIG. 13. The current that is transmitted by the second capacitor 207 decreases gradually, and a direction of the voltage that is output by the second capacitor 207 remains unchanged, to form a positive half cycle signal of the power supply voltage of the second part of loads. The switch Q1 is controlled to be turned on, and other switches are controlled to be turned off. Starting from the first terminal of the positive bus capacitor C1, a direct current successively passes through the switch Q1, the second inductor 205, and the second capacitor 207 to return to the neutral point N. For a current transmission direction, refer to FIG. 14. In this case, the second capacitor 207 outputs a voltage whose upper end is negative and lower end is positive. Because a current flowing through the second inductor 205 cannot suddenly change, a current that is output by the second capacitor 207 increases gradually. After the second inductor 205 completes energy storage or stored energy reaches a target value, the switch Q1 is controlled to be turned off. In this case, the second inductor 205 performs freewheeling by using the switches S1 and S2 in the first freewheeling branch. For a current transmission direction, refer to FIG. 15. The current that is transmitted by the second capacitor 207 decreases gradually, and a direction of the electric energy that is output by the second capacitor 207 remains unchanged, to form a negative half cycle signal of the power supply voltage of the second part of loads. In addition, the power supply voltage is output to the second part of loads by using the first terminal of the second capacitor 207 and the second terminal of the second capacitor 207, to supply power to the second part of loads.

Specifically, when the inverter 200 is in an on-grid state, a time sequence of turning on the four switches in the first bridge arm and the second bridge arm may be controlled to convert a voltage of the positive bus C1 and a voltage of the negative bus C2 in the input capacitor branch 201 into the line voltage of the split-phase grid, to implement a grid connection of the power generation system. When the inverter 200 is in an off-grid state, the inverter 200 is connected to the load, a time sequence of turning on the two switches in the second bridge arm may be controlled to convert a voltage of the positive bus C1 or a voltage of the negative bus C2 into the power supply voltage of the first part of loads, and a time sequence of turning on the two switches in the first bridge arm may be controlled to convert a voltage of the positive bus C1 or a voltage of the negative bus C2 into the power supply voltage of the second part of loads, so as to supply power to the second part of loads.

It should be understood that, when the inverter provided in this embodiment of this application is in an on-grid state, the H-bridge inverter circuit formed by the first bridge arm 202 and the second bridge arm 203 receives the voltage between two terminals of the positive bus capacitor C1 and the voltage between two terminals of the negative bus capacitor C2. When the inverter 200 provided in this embodiment of this application is in an off-grid state, the single-phase inverter circuit receives the voltage of the positive bus C1 or the voltage of the negative bus C2, and the voltage is only half of the voltage received by the inverter 200 in an on-grid state. Therefore, a voltage borne by the switch in the single-phase inverter circuit is less than a voltage borne by the switch in the H-bridge inverter circuit. Therefore, when the inverter 200 is in an off-grid state, a conduction loss of the switch in the inverter 200 is low, so that efficiency of the inverter 200 is effectively improved.

### Embodiment 2

The freewheeling circuit 208 may include a first freewheeling branch, a second freewheeling branch, and a third freewheeling branch.

The first freewheeling branch is separately connected to the intermediate node of the first bridge arm 202 and the neutral point N. When the inverter 200 is in an off-grid state, the first freewheeling branch may provide a freewheeling path for the second inductor 205 in the first single-phase inverter circuit. The second freewheeling branch is separately connected to the intermediate node of the second bridge arm 203 and the neutral point N. When the inverter 200 is in an off-grid state, the second freewheeling branch may provide a freewheeling path for the first inductor 204 in the second single-phase inverter circuit. A first terminal of the third freewheeling branch is connected to the intermediate node of the first bridge arm 202 by using an intermediate node of the first freewheeling branch, and a second terminal of the third freewheeling branch is connected to the intermediate node of the second bridge arm 203 by using an intermediate node of the second freewheeling branch. When the inverter 200 is in an on-grid state, the third freewheeling branch may provide a freewheeling path for the first inductor 204 and the second inductor 205 in the H -bridge inverter circuit.

The first freewheeling branch includes a first switch S1 and a second switch S2. The second freewheeling branch includes a third switch S3 and a fourth switch S4. The third freewheeling branch includes a seventh switch S7.

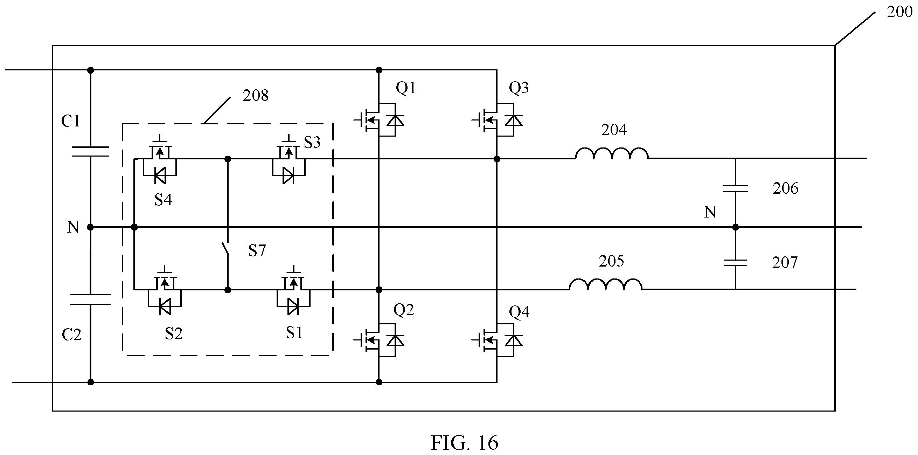

Specifically, referring to FIG. 16, a first electrode of the first switch S1 is connected to the intermediate node of the first bridge arm 202, and a second electrode of the first switch S1 is connected to a second electrode of the second switch S2. A first electrode of the second switch S2 is connected to the neutral point N. A first electrode of the third switch S3 is connected to the intermediate node of the second bridge arm 203, and a second electrode of the third switch S3 is connected to a second electrode of the fourth switch S4. A first electrode of the fourth switch S4 is connected to the neutral point N. A first electrode of the seventh switch S7 is connected to the second electrode of the first switch S1, and a second electrode of the seventh switch S7 is connected to the second electrode of the third switch S3.

With reference to FIG. 16, the following describes a freewheeling process of the freewheeling circuit 208 provided in Embodiment 2.

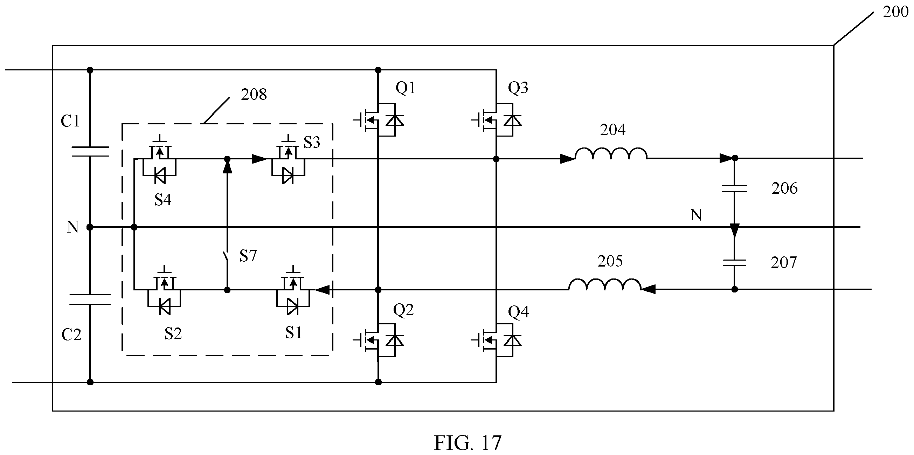

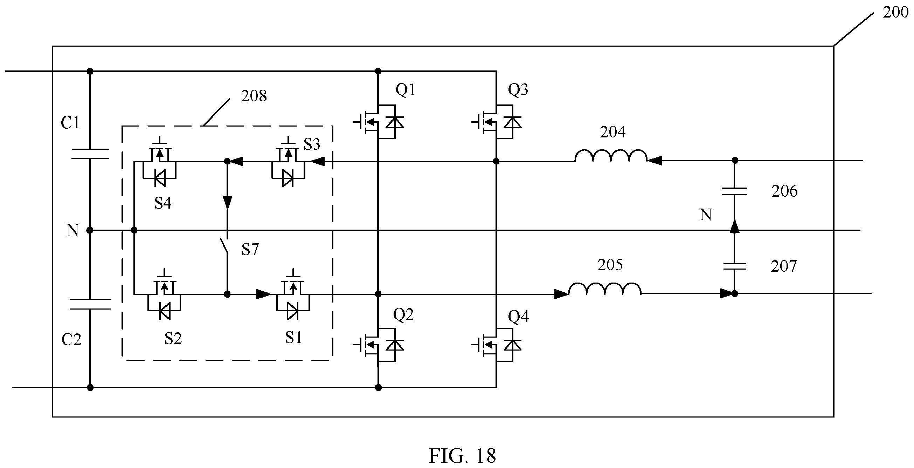

When the inverter 200 provided in this embodiment of this application is in an on-grid state, the switch S7 is controlled to be in a turn-on state in a long term. In a positive half cycle of mains power that is output in the split-phase grid, the switch Q2 and the switch Q3 are controlled to be turned on, and the first inductor 204 and the second inductor 205 store energy. After the first inductor 204 and the second inductor 205 complete energy storage, the switch Q2 and the switch Q3 are controlled to be turned off, and the switch S3 and the first switch S1 are controlled to be turned on. The first inductor 204 and the second inductor 205 perform freewheeling by using the switch S1, the switch S3, and the switch S7. For a current transmission direction, refer to FIG. 17. In a negative half cycle of mains power, the switch Q1 and the switch Q4 are controlled to be turned on, and the first inductor 204 and the second inductor 205 store energy. After the first inductor 204 and the second inductor 205 complete energy storage, the switch Q1 and the switch Q4 are controlled to be turned off, and the switch S1 and the switch S3 are controlled to be turned on. The first inductor 204 and the second inductor 205 perform freewheeling by using the switch S1, the switch S3, and the switch S7. For a current transmission direction, refer to FIG. 18.

When the inverter 200 provided in this embodiment of this application is in an off-grid state, the switch S7 is controlled to be in a turn-off state in a long term. It should be noted that, because devices in the first freewheeling branch and the second freewheeling branch and connection manners thereof do not change, freewheeling manners of the first freewheeling branch and the second freewheeling branch are the same as those in Embodiment 1. Details are not described herein again in this application.

In actual use, if the switch S7 is a MOSFET, due to a function of a parasitic diode in the MOSFET, when the first single-phase inverter circuit performs freewheeling, if the switch Q2 in the second single-phase inverter circuit is turned on, a freewheeling current of the inductor in the first single-phase inverter circuit may pass through the parasitic diode in the MOSFET, a parasitic diode in the switch S1, and the switch Q2 to return to a negative electrode of the negative bus capacitor C2. In this case, a short-circuit path of the negative bus capacitor C2 is formed by using the switch S4, the switch S7, the switch S1, and the switch Q2. A switch in the short-circuit path is damaged due to an overlarge short-circuit current. This affects safe running of the inverter 200. To ensure safe running of the inverter 200, the switch S7 provided in this embodiment of this application may be a relay.

It should be understood that, because the switch S7 is in a turn-on state or a turn-off state in a long term, a loss caused by frequently switching a state of the switch is reduced.

### Embodiment 3

The freewheeling circuit 208 may include a first freewheeling branch, a second freewheeling branch, and a third freewheeling branch.

The first freewheeling branch is separately connected to the intermediate node of the first bridge arm 202 and the neutral point N. When the inverter 200 is in an off-grid state, the first freewheeling branch may provide a freewheeling path for the second inductor 205 in the first single-phase inverter circuit. The second freewheeling branch is connected to the neutral point N. The second freewheeling branch is connected to the intermediate node of the second bridge arm by using an intermediate node of the third freewheeling branch. When the inverter 200 is in an off-grid state, the second freewheeling branch may provide a freewheeling path for the first inductor 204 in the second single-phase inverter circuit. The third freewheeling branch is separately connected to the intermediate node of the first bridge arm 202 and the intermediate node of the second bridge arm 203. When the inverter 200 is in an on-grid state, the third freewheeling branch may provide a freewheeling path for the first inductor 204 and the second inductor 205 in the H-bridge inverter circuit.

The first freewheeling branch includes a first switch S1 and a second switch S2. The second freewheeling branch includes an eighth switch S8. The third freewheeling branch includes a fifth switch S5 and a sixth switch S6.

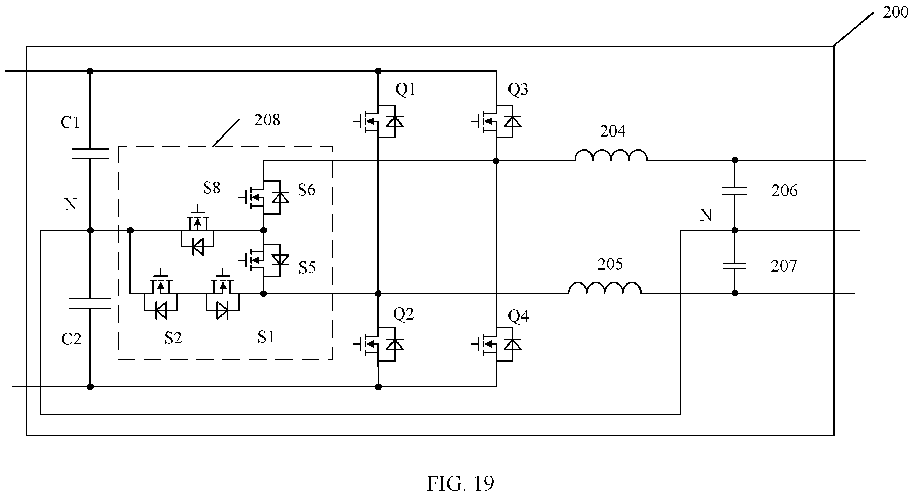

Specifically, referring to FIG. 19, a first electrode of the first switch S1 is connected to the intermediate node of the first bridge arm 202, and a second electrode of the first switch S1 is connected to a second electrode of the second switch S2. A first electrode of the second switch S2 is connected to the neutral point N. A first electrode of the eighth switch S8 is connected to the neutral point N, and a second electrode of the eighth switch S8 is connected to a second electrode of the fifth switch S5. A first electrode of the fifth switch S5 is connected to the intermediate node of the first bridge arm 202, and the second electrode of the fifth switch S5 is connected to a second electrode of the sixth switch S6. A first electrode of the sixth switch S6 is connected to the intermediate node of the second bridge arm 203.

With reference to FIG. 19, the following describes a freewheeling process of the freewheeling circuit provided in Embodiment 3.

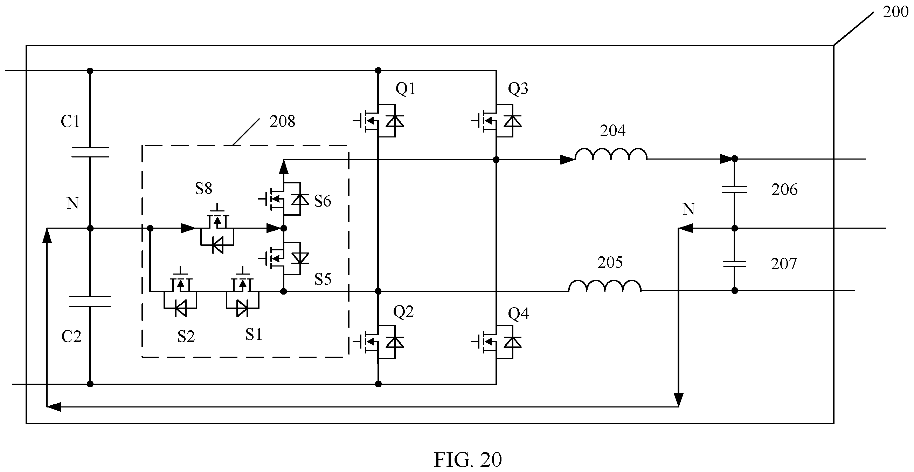

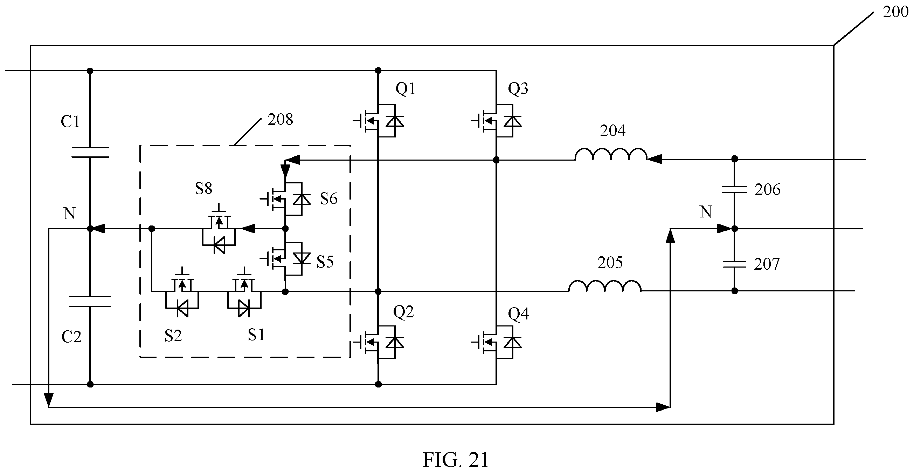

When the inverter 200 provided in this embodiment of this application supplies power to the first part of loads, in a positive half cycle of the power supply voltage, the switch Q3 is controlled to be turned on, and the first inductor 204 stores energy. After the first inductor 204 completes energy storage or stored energy reaches a target value, the switch Q3 is controlled to be turned off, and the switch S6 and the switch S8 are controlled to be turned on. The first inductor 204 performs freewheeling by using the switch S6 and the switch S8. For a current transmission direction, refer to FIG. 20. In a negative half cycle of the power supply voltage, the switch Q4 is controlled to be turned on, and the first inductor 204 stores energy. After the first inductor 204 completes energy storage or stored energy reaches a target value, the switch S6 and the switch S8 are controlled to be turned on. The first inductor 204 performs freewheeling by using the switch S6 and the switch S8. For a current transmission direction, refer to FIG. 21.

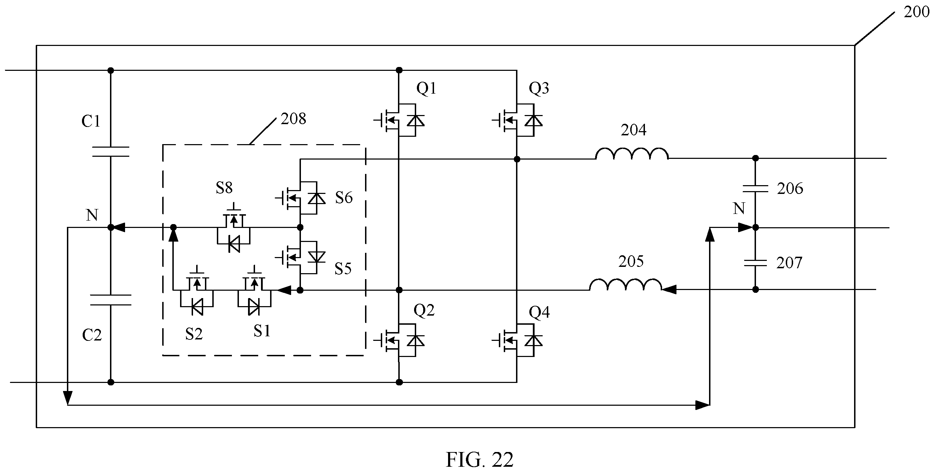

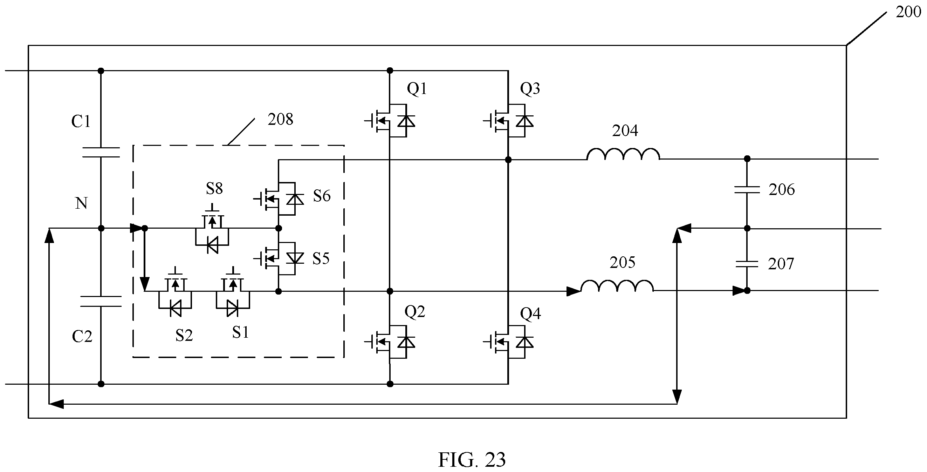

When the inverter 200 provided in this embodiment of this application supplies power to the second part of loads, in a positive half cycle of the power supply voltage, the switch Q2 is controlled to be turned on, and the second inductor 205 stores energy. After the second inductor 205 completes energy storage or stored energy reaches a target value, the switch Q2 is controlled to be turned off, and the switch S1 and the switch S2 are controlled to be turned on. The second inductor 205 performs freewheeling by using the switch S6 and the switch S8. For a current transmission direction, refer to FIG. 22. In a negative half cycle of the power supply voltage, the switch Q1 is controlled to be turned on, and the second inductor 205 stores energy. After the second inductor 205 completes energy storage or stored energy reaches a target value, the switch Q1 is controlled to be turned off, and the switch S1 and the switch S2 are controlled to be turned on. The second inductor 205 performs freewheeling by using the switch S1 and the switch S2. For a current transmission direction, refer to FIG. 23.

It should be understood that, because a device in the third freewheeling branch and a connection manner thereof do not change, and a freewheeling path does not change, a freewheeling manner of the third freewheeling branch is the same as that in Embodiment 1. Details are not described herein again in this application.

### Embodiment 4

The freewheeling circuit 208 may include a first freewheeling branch, a second freewheeling branch, and a third freewheeling branch.

The second freewheeling branch is separately connected to the intermediate node of the second bridge arm 203 and the neutral point N. When the inverter 200 is in an off-grid state, the second freewheeling branch may provide a freewheeling path for the first inductor 204 in the second single-phase inverter circuit. The third freewheeling branch is separately connected to the intermediate node of the first bridge arm 202 and the intermediate node of the second bridge arm 203. When the inverter 200 is in an on-grid state, the third freewheeling branch may provide a freewheeling path for the first inductor 204 and the second inductor 205 in the H-bridge inverter circuit. The first freewheeling branch is connected to the neutral point N. The first freewheeling branch is connected to the intermediate node of the first bridge arm 202 by using an intermediate node of the third freewheeling branch. When the inverter 200 is in an off-grid state, the first freewheeling branch may provide a freewheeling path for the second inductor 205 in the first single-phase inverter circuit.

The first freewheeling branch includes a ninth switch S9. The second freewheeling branch includes a third switch S3 and a fourth switch S4. The third freewheeling branch includes a fifth switch S5 and a sixth switch S6.

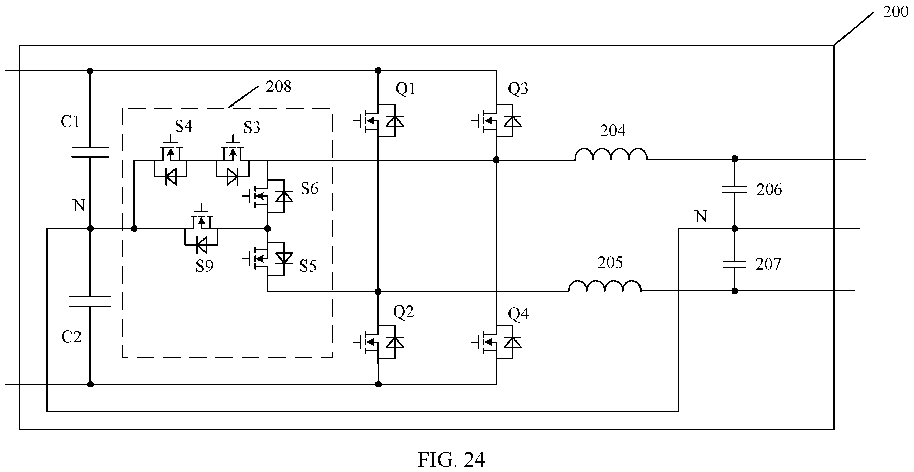

Specifically, referring to FIG. 24, a first electrode of the ninth switch S9 is connected to the neutral point N, and a second electrode of the ninth switch S9 is connected to a second electrode of the fifth switch S5. A first electrode of the third switch S3 is connected to the intermediate node of the second bridge arm 203, and a second electrode of the third switch S3 is connected to a second electrode of the fourth switch S4. A first electrode of the fourth switch S4 is connected to the neutral point N. A first electrode of the fifth switch S5 is connected to the intermediate node of the first bridge arm 202, and the second electrode of the fifth switch S5 is connected to a second electrode of the sixth switch S6. A first electrode of the sixth switch S6 is connected to the intermediate node of the second bridge arm 203.

The following describes a freewheeling process of the freewheeling circuit 208 provided in Embodiment 4.

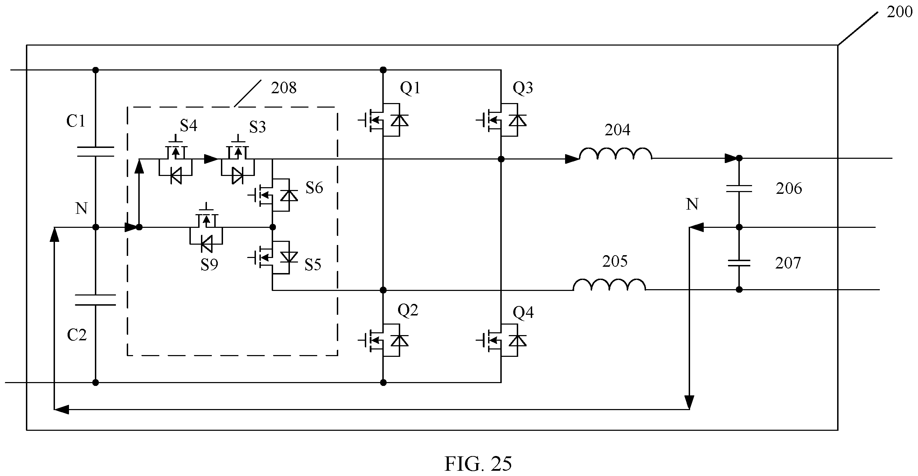

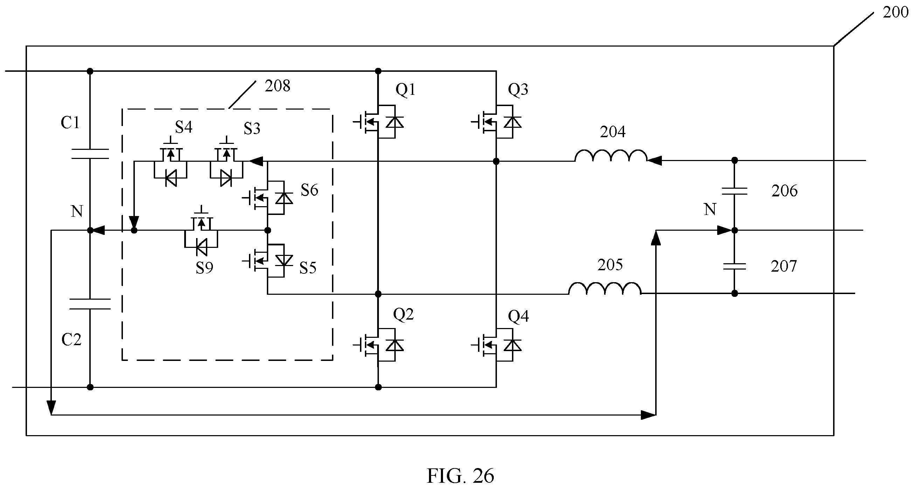

When the inverter 200 provided in this embodiment of this application supplies power to the first part of loads, in a positive half cycle of the power supply voltage, the switch Q3 is controlled to be turned on, and the first inductor 204 stores energy. After the first inductor 204 completes energy storage or stored energy reaches a target value, the switch Q3 is controlled to be turned off, and the switch S3 and the switch S4 are controlled to be turned on. The first inductor 204 performs freewheeling by using the switch S3 and the switch S4. For a current transmission direction, refer to FIG. 25. In a negative half cycle of the power supply voltage, the switch Q4 is controlled to be turned on, and the first inductor 204 stores energy. After the first inductor 204 completes energy storage or stored energy reaches a target value, the switch Q4 is controlled to be turned off, and the switch S3 and the switch S4 are controlled to be turned on. The first inductor 204 performs freewheeling by using the switch S3 and the switch S4. For a current transmission direction, refer to FIG. 26.

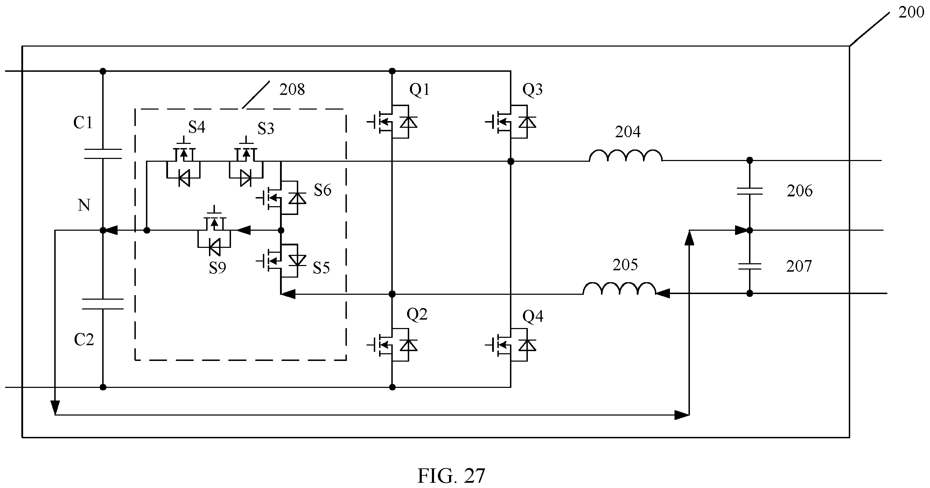

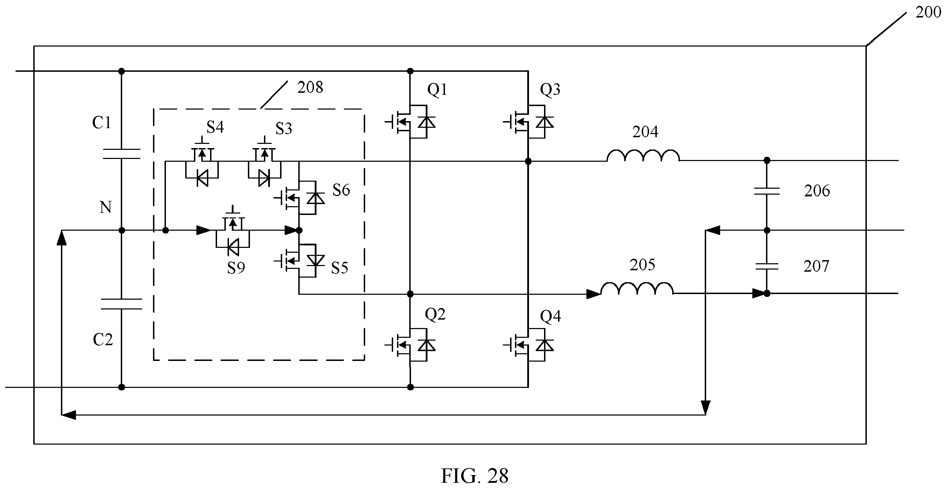

When the inverter 200 provided in this embodiment of this application supplies power to the second part of loads, in a positive half cycle of the power supply voltage, the switch Q2 is controlled to be turned on, and the second inductor 205 stores energy. After the second inductor 205 completes energy storage or stored energy reaches a target value, the switch Q2 is controlled to be turned off, and the switch S9 and the switch S5 are controlled to be turned on. The second inductor 205 performs freewheeling by using the switch S9 and the switch S5. For a current transmission direction, refer to FIG. 27. In a negative half cycle of the power supply voltage, the switch Q1 is controlled to be turned on, and the second inductor 205 stores energy. After the second inductor 205 completes energy storage or stored energy reaches a target value, the switch Q1 is controlled to be turned off, and the switch S9 and the switch S5 are controlled to be turned on. The second inductor 205 performs freewheeling by using the switch S5 and the switch S9. For a current transmission direction, refer to FIG. 28.

It should be understood that, because a device in the third freewheeling branch and a connection manner thereof do not change, and a freewheeling path does not change, a freewheeling manner of the third freewheeling branch is the same as that in Embodiment 1. Details are not described herein again in this application.

### Embodiment 5

The freewheeling circuit includes a first branch, a second branch, and a third branch.

A first terminal of the first branch is connected to the neutral point N, and a second terminal of the first branch is connected to a first terminal of the second branch and a first terminal of the third branch. A second terminal of the second branch is connected to the intermediate node of the first bridge arm 202. A second terminal of the third branch is connected to the intermediate node of the second bridge arm 203. The second branch and the third branch are connected in series to form the third freewheeling branch. The first branch and the second branch are connected in series to form the first freewheeling branch. The first branch and the third branch are connected in series to form the second freewheeling branch.

Specifically, the first branch includes a tenth switch S10, the second branch includes an eleventh switch S11, and the third branch includes a twelfth switch S12.

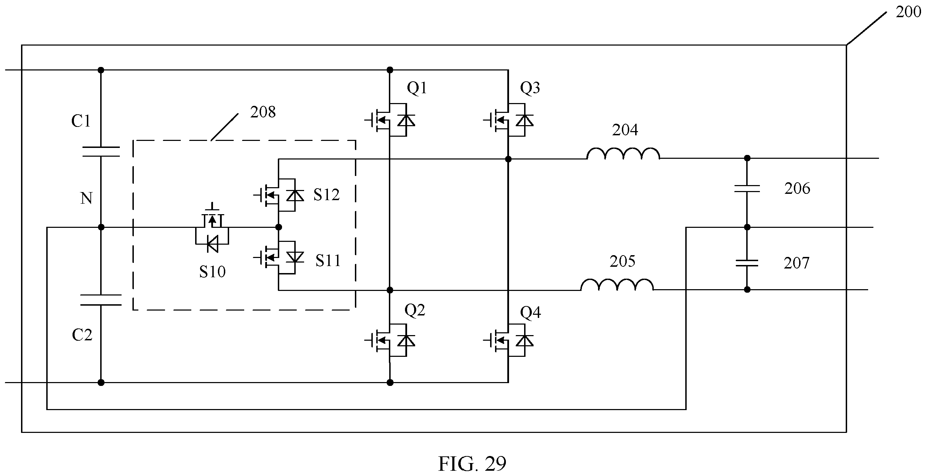

Specifically, referring to FIG. 29, a first electrode of the tenth switch S10 is connected to the neutral point N. A second electrode of the eleventh switch S11 is connected to a second electrode of the tenth switch S10, and a first electrode of the eleventh switch S11 is connected to the intermediate node of the first bridge arm. A second electrode of the twelfth switch S12 is connected to the second electrode of the tenth switch S10, and a first electrode of the twelfth switch S12 is connected to the intermediate node of the second bridge arm.

The following describes a freewheeling process of the freewheeling circuit 208 with reference to FIG. 29.

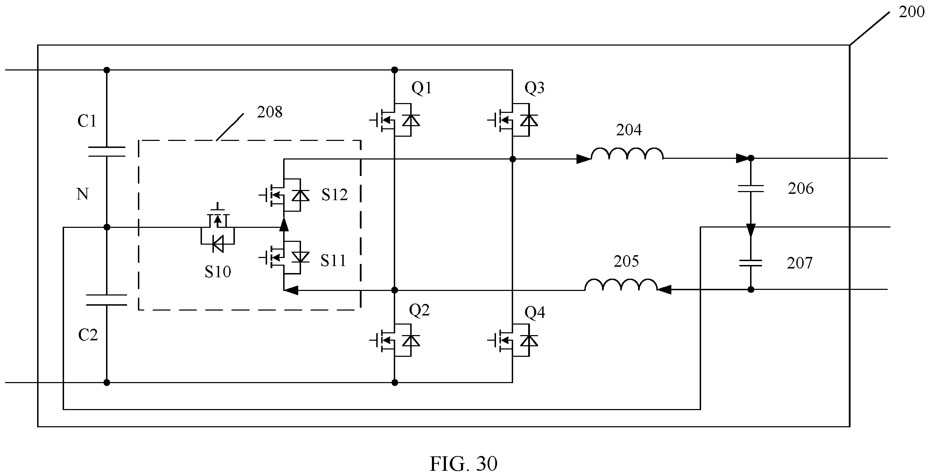

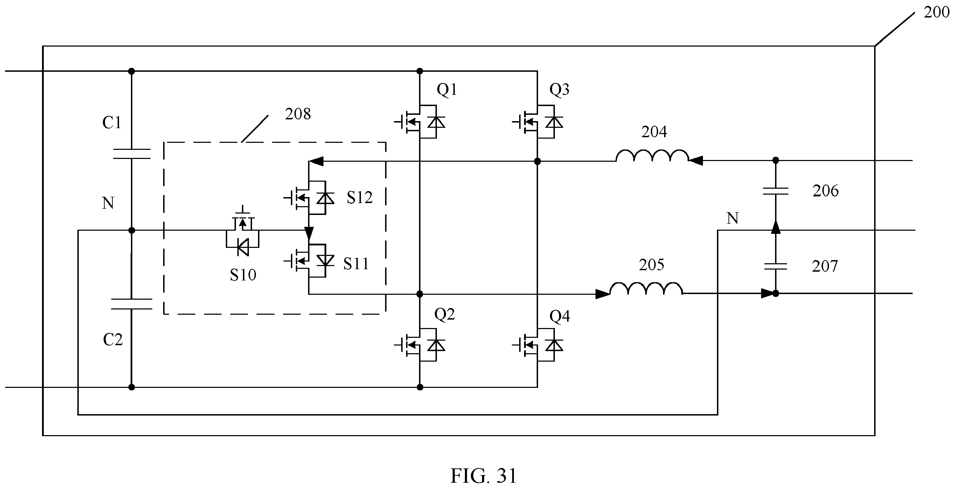

When the inverter 200 provided in this embodiment of this application is in an on-grid state, in a positive half cycle of mains power transmitted in the split-phase grid, the switch Q3 and the switch Q2 are controlled to be turned on, and the first inductor 204 and the second inductor 205 store energy. After the first inductor 204 and the second inductor 205 complete energy storage or stored energy reaches a target value, the switch Q3 and the switch Q2 are controlled to be turned off, and the switch S11 and the switch S12 are controlled to be turned on. The first inductor 204 and the second inductor 205 perform freewheeling by using the switch S11 and the switch S12. For a current transmission direction, refer to FIG. 30. In a negative half cycle of mains power, the switch Q4 and the switch Q1 are controlled to be turned on, and the first inductor 204 and the second inductor 205 store energy. After the first inductor 204 and the second inductor 205 complete energy storage or stored energy reaches a target value, the switch Q4 and the switch Q1 are controlled to be turned off, and the switch S11 and the switch S12 are controlled to be turned on. In this case, the first inductor 204 and the second inductor 205 perform freewheeling by using the switch S11 and the switch S12. For a current transmission direction, refer to FIG. 31.

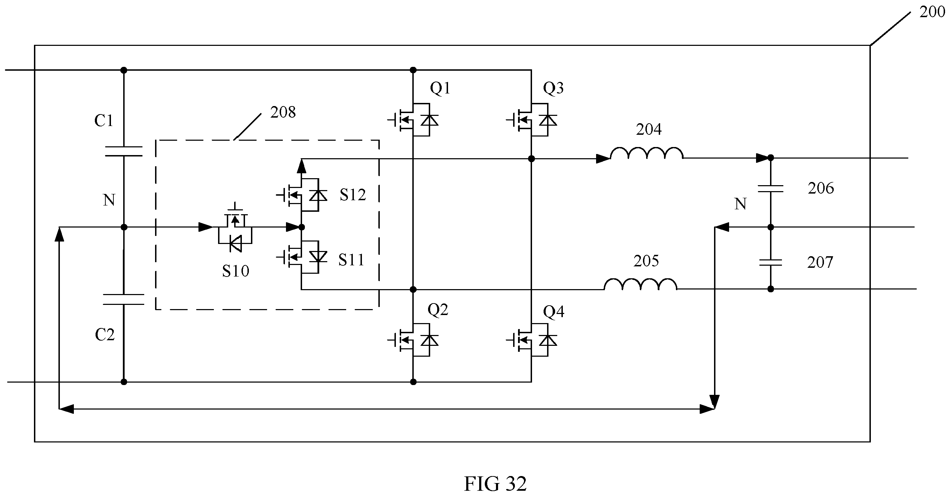

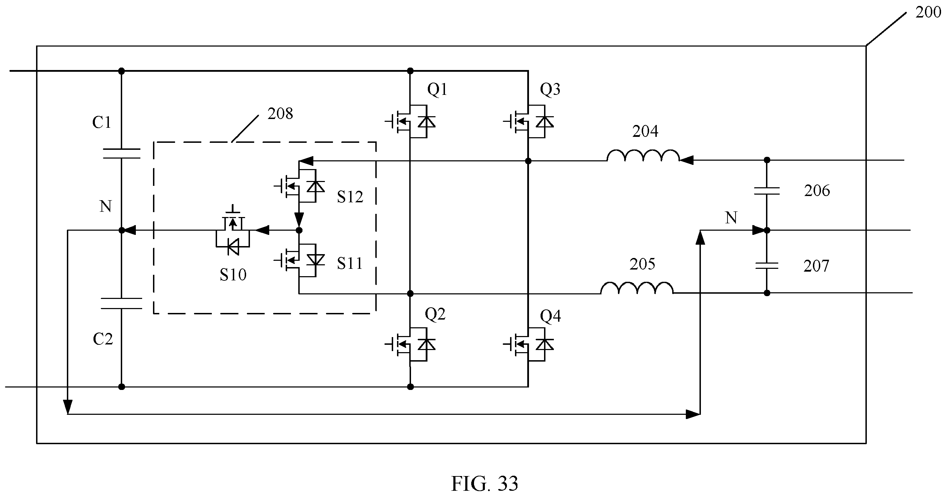

When the inverter 200 provided in this embodiment of this application supplies power to the first part of loads, in a positive half cycle of the power supply voltage, the switch Q3 is controlled to be turned on, and the first inductor 204 stores energy. After the first inductor 204 completes energy storage or stored energy reaches a target value, the switch Q3 is controlled to be turned off, and the switch S10 and the switch S12 are controlled to be turned on. The first inductor 204 performs freewheeling by using the switch S10 and the switch S12. For a current transmission direction, refer to FIG. 32. In a negative half cycle of the power supply voltage, the switch Q4 is controlled to be turned on, and the first inductor 204 stores energy. After the first inductor 204 completes energy storage or stored energy reaches a target value, the switch Q4 is controlled to be turned off, and the switch S10 and the switch S12 are controlled to be turned on. In this case, the first inductor 204 performs freewheeling by using the switch S10 and the switch S12. For a current transmission direction, refer to FIG. 33.

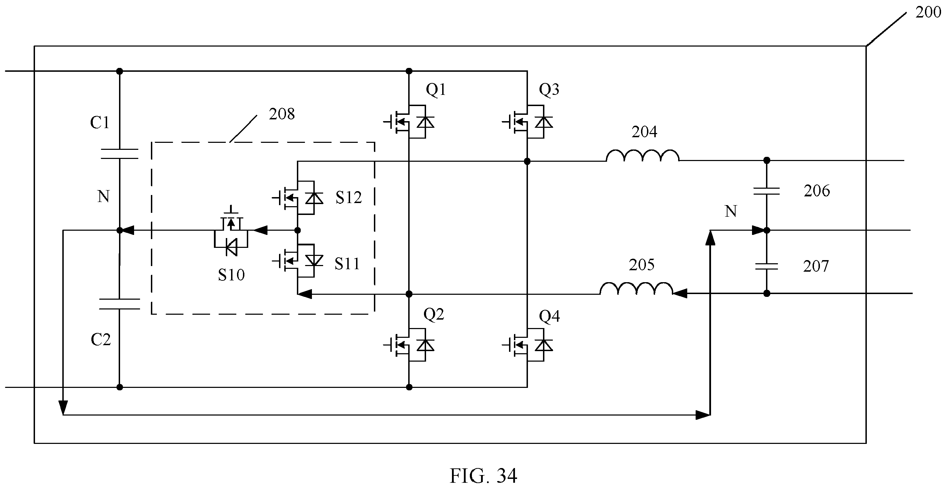

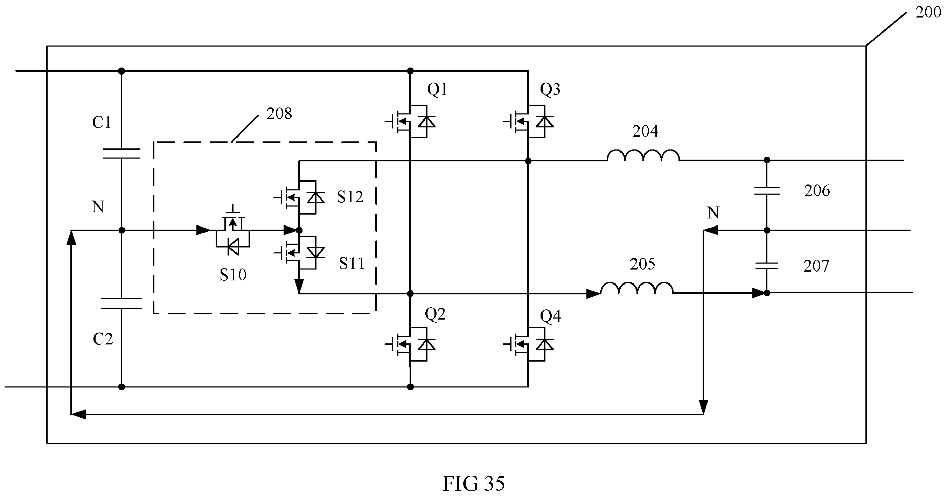

When the inverter 200 provided in this embodiment of this application supplies power to the second part of loads, in a positive half cycle of the power supply voltage, the switch Q2 is controlled to be turned on, and the first inductor 204 stores energy. After the first inductor 204 completes energy storage or stored energy reaches a target value, the switch Q2 is controlled to be turned off, and the switch S10 and the switch S11 are controlled to be turned on. The first inductor 204 performs freewheeling by using the switch S10 and the switch S11. For a current transmission direction, refer to FIG. 34. In a negative half cycle of the power supply voltage, the switch Q1 is controlled to be turned on, and the first inductor 204 stores energy. After the first inductor 204 completes energy storage or stored energy reaches a target value, the switch Q1 is controlled to be turned off, and the switch S10 and the switch S11 are controlled to be turned on. In this case, the first inductor 204 performs freewheeling by using the switch S10 and the switch S11. For a current transmission direction, refer to FIG. 35.

It should be noted that, when the inverter 200 provided in this embodiment of this application separately supplies power to the first part of loads and the second part of loads, and in a positive half cycle of the power supply voltage of the first part of loads, if the switch Q2 is turned on and the second capacitor 207 outputs a positive half cycle signal of the power supply voltage of the second part of loads when the first inductor 204 performs freewheeling by using the switch S12 and the switch S10, a freewheeling current of the first inductor 204 may pass through the switch S11 and the switch Q2 to return to a second terminal of the negative bus C2. In this case, a short-circuit path of the negative bus capacitor C2 is formed by using the switch S10, the switch S11, and the switch Q2. A switch in the short-circuit path is directly damaged due to a short-circuit current. This affects normal running of the inverter 200. To ensure safe running of the inverter 200, the inverter 200 supplies power to the first part of loads and the second part of loads in turn.

In an example, when the inverter 200 supplies power to the first part of loads and the second part of loads, a phase difference between the power supply voltage of the first part of loads and the power supply voltage of the second part of loads is 180 degrees.

Based on a same invention concept, an embodiment of this application further provides an inverter apparatus, and the inverter apparatus includes a controller and the foregoing inverter 200.

Specifically, the controller may be connected to a plurality of switches in the inverter 200, and provide a drive signal for the plurality of switches in the inverter 200.

It should be understood that the inverter 200 in this application includes devices such as a switch, an inductor, and a capacitor. A value of an output voltage of the inverter 200 may be implemented by adjusting a working state of the device (for example, the switch).

Specifically, if the switch in the inverter 200 is a MOSFET, the controller may be connected to a gate of the MOSFET to control the output voltage of the inverter 200 by controlling the MOS transistor to be turned on or turned off. If the switch in the inverter is a BJT, the controller may be connected to a base of the BJT to control the output voltage of the inverter 200 by controlling the BJT to be turned on or turned off.

In a specific implementation, the controller may be any one of a micro control unit (micro controller unit, MCU), a central processing unit (central processing unit, CPU), and a digital signal processor (digital signal processor, DSP). Certainly, a specific form of the controller is not limited to the foregoing example.

It is clear that a person skilled in the art can make various modifications and variations to this application without departing from the scope of this application. This application is intended to cover these modifications and variations of this application provided that they fall within the scope of protection defined by the following claims and their equivalent technologies.

## Claims

1. An inverter, comprising: an input capacitor branch, a first bridge arm, a second bridge arm, a first inductor, a second inductor, a first capacitor, a second capacitor, and a freewheeling circuit, wherein
a first terminal of the first bridge arm is separately connected to a first terminal of the second bridge arm and a first terminal of the input capacitor branch, and a second terminal of the first bridge arm is separately connected to a second terminal of the second bridge arm and a second terminal of the input capacitor branch;
an intermediate node of the first bridge arm is connected to a first terminal of the second inductor;
an intermediate node of the second bridge arm is connected to a first terminal of the first inductor;
a first terminal of the first capacitor is connected to a second terminal of the first inductor, and a second terminal of the first capacitor is connected to a first terminal of the second capacitor and a neutral point of a direct current input, wherein the neutral point is an intermediate node of the input capacitor branch;
a second terminal of the second capacitor is connected to a second terminal of the second inductor; and
the freewheeling circuit is separately connected to the neutral point, the intermediate node of the first bridge arm, and the intermediate node of the second bridge arm, and is configured to provide a freewheeling path for the first inductor and/or the second inductor.

2. The inverter according to claim 1, wherein the freewheeling circuit comprises a first freewheeling branch, a second freewheeling branch, and the third freewheeling branch, and each freewheeling branch comprises one or two switches;
the first freewheeling branch is separately connected to the intermediate node of the first bridge arm and the neutral point, and the first freewheeling branch is configured to provide a freewheeling path for the second inductor;
the second freewheeling branch is separately connected to the intermediate node of the second bridge arm and the neutral point, and the second freewheeling branch is configured to provide a freewheeling path for the first inductor; and
the third freewheeling branch is separately connected to the intermediate node of the first bridge arm and the intermediate node of the second bridge arm, and the third freewheeling branch is configured to provide a freewheeling path for the first inductor and the second inductor.

3. The inverter according to claim 2, wherein the first freewheeling branch comprises a first switch and a second switch, wherein
a first electrode of the first switch is connected to the intermediate node of the first bridge arm, and a second electrode of the first switch is connected to a second electrode of the second switch; and
a first electrode of the second switch is connected to the neutral point; and
the second freewheeling branch comprises a third switch and a fourth switch, wherein
a first electrode of the third switch is connected to the intermediate node of the second bridge arm, and a second electrode of the third switch is connected to a second electrode of the fourth switch; and
a first electrode of the fourth switch is connected to the neutral point.

4. The inverter according to claim 2 or 3, wherein the third freewheeling branch comprises a fifth switch and a sixth switch, wherein
a first electrode of the fifth switch is connected to the intermediate node of the first bridge arm, and a second electrode of the fifth switch is connected to a second electrode of the sixth switch; and
a first electrode of the sixth switch is connected to the intermediate node of the second bridge arm.

5. The inverter according to claim 3, wherein a first terminal of the third freewheeling branch is connected to the intermediate node of the first bridge arm by using an intermediate node of the first freewheeling branch, and a second terminal of the third freewheeling branch is connected to the intermediate node of the second bridge arm by using an intermediate node of the second freewheeling branch.

6. The inverter according to claim 5, wherein the third freewheeling branch comprises a seventh switch; and
a first electrode of the seventh switch is connected to the second electrode of the first switch, and a second electrode of the seventh switch is connected to the second electrode of the third switch.

7. The inverter according to claim 2, wherein the second freewheeling branch is connected to the intermediate node of the second bridge arm by using an intermediate node of the third freewheeling branch.

8. The inverter according to claim 7, wherein the second freewheeling branch comprises an eighth switch; and
a first electrode of the eighth switch is connected to the neutral point, and a second electrode of the eighth switch is connected to the intermediate node of the third freewheeling branch.

9. The inverter according to claim 2, wherein the first freewheeling branch is connected to the intermediate node of the first bridge arm by using an intermediate node of the third freewheeling branch.

10. The inverter according to claim 9, wherein the first freewheeling branch comprises a ninth switch; and
a first electrode of the ninth switch is connected to the neutral point, and a second electrode of the ninth switch is connected to the intermediate node of the third freewheeling branch.

11. The inverter according to claim 2, wherein the freewheeling circuit comprises a first branch, a second branch, and a third branch, wherein
a first terminal of the first branch is connected to the neutral point, and a second terminal of the first branch is connected to a first terminal of the second branch and a first terminal of the third branch;
a second terminal of the second branch is connected to the intermediate node of the first bridge arm;
a second terminal of the third branch is connected to the intermediate node of the second bridge arm;
the second branch and the third branch are connected in series to form the third freewheeling branch;
the first branch and the second branch are connected in series to form the first freewheeling branch; and
the first branch and the third branch are connected in series to form the second freewheeling branch.

12. The inverter according to claim 11, wherein the first branch comprises a tenth switch, and a first electrode of the tenth switch is connected to the neutral point;
the second branch comprises an eleventh switch, a second electrode of the eleventh switch is connected to a second electrode of the tenth switch, and a first electrode of the eleventh switch is connected to the intermediate node of the first bridge arm; and
the third branch comprises a twelfth switch, a second electrode of the twelfth switch is connected to the second electrode of the tenth switch, and a first electrode of the twelfth switch is connected to the intermediate node of the second bridge arm.

13. An inverter apparatus, comprising a controller and the inverter according to any one of claims 1 to 12.
